(19) Europäisches Patentamt
European Patent Office
Office européen des brevets

(11) EP 3 838 951 A1

# (12) EUROPÄISCHE PATENTANMELDUNG

(43) Veröffentlichungstag:
**23.06.2021 Patentblatt 2021/25**

(51) Int Cl.:
***C08G 18/10*** (2006.01) ***C08G 18/32*** (2006.01)
***C08G 18/73*** (2006.01)

(21) Anmeldenummer: **19216816.9**

(22) Anmeldetag: **17.12.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

## (54) VERFAHREN ZUR KONTINUIERLICHEN HERSTELLUNG VON THERMOPLASTISCHEM POLYURETHAN

(57) Die vorliegende Erfindung betrifft ein Verfahren zur kontinuierlichen Herstellung thermoplastischen Polyurethans durch Umsetzung der Komponenten (A) einem oder mehreren cycloaliphatischen, aliphatischen und/oder araliphatischen Polyisocyanaten und (B) einem oder mehreren cycloaliphatischen, aliphatischen und/oder araliphatischen Polyolen, wobei die Gesamtmenge der Komponente (B) eine Hydroxylzahl von 600 mg KOH/g bis 1830 mg KOH/g bestimmt gemäß DIN EN ISO 4629-2:2016 aufweist. Das Verfahren umfasst die Verfahrensschritte: a) Herstellen einer Mischung aus einer Teilmenge der Komponente (A), einer Teilmenge oder der Gesamtmenge der Komponente (B) und gegebenenfalls einer Teilmenge oder der Gesamtmenge der Komponente (C), wobei in Verfahrensschritt a) ein molares Verhältnis von Komponente (A) zu Komponente (B) im Bereich von 0,6 : 1,0 bis 0,95 : 1,0 vorliegt; b) Vermischen der im Verfahrensschritt a) hergestellten Mischung mit einem aus Verfahrensschritt e) erhaltenen Oligomerisat-Ausgangsteilstrom; c) Zur Reaktion bringen der Mischung aus Verfahrensschritt b); d) Aufteilen der in Schritt c) erhaltenen Reaktionsmischung in zwei Ausgangsteilströme; e) Rückführen eines Ausgangsteilstromes aus Verfahrensschritt d) als Eingangsteilstrom für die Mischung im Verfahrensschritt b); f) Vermischen der Restmenge der Komponente (A) und gegebenenfalls der Restmenge der Komponenten (B) und (C) mit dem verbleibenden Ausgangsteilstrom des Verfahrensschrittes d); und g) Ausreagieren der in Verfahrensschritt f) erhaltenen Mischung zum Erhalt eines thermoplastischen Polyurethans. Die Erfindung betrifft weiterhin thermoplastisches Polyurethan erhältlich oder erhalten durch das erfindungsgemäße Verfahren, sowie eine Zusammensetzung enthaltend das erfindungsgemäße thermoplastische Polyurethan und dessen Verwendung.

EP 3 838 951 A1

## Beschreibung

Die vorliegende Erfindung betrifft ein Verfahren zur kontinuierlichen Herstellung thermoplastischen Polyurethans durch Umsetzung der Komponenten (A) einem oder mehreren cycloaliphatischen, aliphatischen und/oder araliphatischen Polyisocyanaten und (B) einem oder mehreren cycloaliphatischen, aliphatischen und/oder araliphatischen Polyolen, wobei die Gesamtmenge der Komponente (B) eine Hydroxylzahl von 600 mg KOH/g bis 1830 mg KOH/g bestimmt gemäß DIN EN ISO 4629-2:2016 aufweist. Das Verfahren umfasst die Verfahrensschritte: a) Herstellen einer Mischung aus einer Teilmenge der Komponente (A), einer Teilmenge oder der Gesamtmenge der Komponente (B) und gegebenenfalls einer Teilmenge oder der Gesamtmenge der Komponente (C), wobei in Verfahrensschritt a) ein molares Verhältnis von Komponente (A) zu Komponente (B) im Bereich von 0,6 : 1,0 bis 0,95 : 1,0 vorliegt; b) Vermischen der im Verfahrensschritt a) hergestellten Mischung mit einem aus Verfahrensschritt e) erhaltenen Oligomerisat-Ausgangsteilstrom; c) Zur Reaktion bringen der Mischung aus Verfahrensschritt b); d) Aufteilen der in Schritt c) erhaltenen Reaktionsmischung in zwei Ausgangsteilströme; e) Rückführen eines Ausgangsteilstromes aus Verfahrensschritt d) als Eingangsteilstrom für die Mischung im Verfahrensschritt b); f) Vermischen der Restmenge der Komponente (A) und gegebenenfalls der Restmenge der Komponenten (B) und (C) mit dem verbleibenden Ausgangsteilstrom des Verfahrensschrittes d); und g) Ausreagieren der in Verfahrensschritt f) erhaltenen Mischung zum Erhalt eines thermoplastischen Polyurethans. Die Erfindung betrifft weiterhin thermoplastisches Polyurethan erhältlich oder erhalten durch das erfindungsgemäße Verfahren, sowie eine Zusammensetzung enthaltend das erfindungsgemäße thermoplastische Polyurethan und dessen Verwendung.

Polyurethane und insbesondere thermoplastische Polyurethane werden aufgrund ihrer hervorragenden physikalischen Eigenschaften seit Jahren für die unterschiedlichsten Einsatzzwecke verwendet. Trotz der breiten Verwendbarkeit von Polyurethanen gibt es Anwendungsbereiche, in denen andere Kunststoffe, wie beispielsweise Polyamid-Kunststoffe, verwendet werden, weil keine Polyurethane mit geeigneten physikalischen Eigenschaften verfügbar sind oder diese nur schwer bereitgestellt werden können. Polyurethane, die aus kurzkettigen Diolen und kurzkettigen Polyisocyanaten aufgebaut sind, weisen wertvolle Eigenschaften auf. Problematisch ist, dass aufgrund der hohe Dichte an reaktiven Gruppen, die Polyaddition von kurzkettigen aliphatischen Diolen mit aliphatischen Polyisocyanaten eine hohe Wärmetönung bzw. Reaktionsenthalpie aufweist, was bei unzureichender Wärmeabfuhr zur Beschädigung, bspw. durch eine Verfärbung, bis hin zur Rückbildung von Monomeren und zur Zerstörung (Veraschung) des Polyurethans führt.

In der industriellen Praxis werden kontinuierliche Herstellungsverfahren bevorzugt, da sich hier Maßstabsvergrößerungen einfacher durchführen lassen und größere Mengen mit konstanter Qualität produziert werden können.

Die Herstellung von Granulaten aus Thermoplasten im Anschluss an ein Batch-Verfahren bedingt die Notwendigkeit, das schmelzeflüssige Polymer bei hoher Temperatur vorzuhalten, bis der Batchbehälter leer ist. Für thermisch empfindliche Produkte ergibt sich hieraus ein über den Granulierprozess / die Granulierzeit kontinuierlich veränderndes Produkteigenschaftsprofil.

Auch lassen sich Verfahrensabläufe aus Batch-Verfahren nur schwer bis gar nicht auf kontinuierliche Verfahren übertragen. Ein besonderes Augenmerk aus verfahrenstechnischer Sicht liegt in der kontrollierten Abführung der freigesetzten Reaktionswärme, was dazu führt, dass Umsetzungen mit hoher Wärmetönung nur schwierig zu handhaben sind.

Die Verwendung von Lösungsmitteln ist ebenfalls nachteilig, da im Produkt verbleibende Restlösungsmittel in die Umwelt freigesetzt werden können und unerwünschte Eigenschaften wie beispielsweise Geruch, Toxizität und/oder eine Verschlechterung der mechanischen Eigenschaften verursachen können. Die vollständige Entfernung von Restlösungsmitteln aus einem Polymer ist grundsätzlich mit einem erhöhten technischen Aufwand und Energieverbrauch verbunden.

DE 10 2011 085 944 A1 beschreibt ein Verfahren zur Herstellung von thermoplastischem Polyurethan mit niedrigem Schmelzpunkt in einem Kreislaufreaktor. Die für das Verfahren benötigten hohen Reaktionstemperaturen fördern die Bildung von Allophanaten und erschweren die Abfuhr der Reaktionswärme von Umsetzungen mit hoher Wärmetönung bzw. machen eine Wärmeabfuhr unmöglich.

Ein Verfahren zur Herstellung von Polyurethan ist beispielsweise aus der WO01/14441 bekannt. Offenbart wird ein Verfahren zur Herstellung von NCO-, NH- oder OH-terminierten Polyurethanen in einem Statikmischer. Wesentlich für dieses Verfahren ist, dass die Temperatur bei der Umsetzung der Komponenten adiabat geführt wird und/oder der Statikmischer begleitbeheizt ist und damit nur für Verfahren geeignet ist, die endotherm sind oder nur eine geringe Exothermie aufweisen. Für die Umsetzung von Komponenten, die eine hohe Reaktionsenthalphie aufweisen, d.h. deren Umsetzung miteinander stark exotherm verläuft, ist das Verfahren nicht geeignet.

EP0519734 offenbart ein Urethanisierungsreaktionsverfahren, wobei ein Polyolgemisch, enthaltend mindestens ein langkettiges Polyol mit einer maximalen Hydroxylzahl von 10 mg/g KOH, mit einer Polyisocyanat-Komponente zu einem Urethan-modifizierten Harz umgesetzt wird. Die Reaktionsmischung wird in einem Statikmischer bei Temperaturen von 90 °C - 200 °C umgesetzt. Aufgrund der geringen Dichte an funktionellen Gruppen, ist auch hier ein Energieeintrag nötig.

Nachteilig bei den oben beschriebenen Verfahren ist, dass diese sich eher für Reaktionen eignen, die entweder endotherm verlaufen oder nur eine geringe Wärmetönung aufweisen und daher einen konstanten Wärmeeintrag erfordern oder adiabat gefahren werden müssen. Bei Systemen, die eine hohe Exothermie der Reaktion aufweisen (≤ -350 kJ/kg), ist der adiabatische Temperaturanstieg problematisch. Ausgehend von Monomeren bei einer Temperatur ausreichend für ein unkatalysiertes Anspringen der Reaktion (> 50 °C), würde bei adiabatischer Fahrweise die Temperatur der Reaktionsprodukte auf deutlich über 300 °C ansteigen. Die Herstellung und Verarbeitung von Polyurethanen bei Temperaturen von > 200 °C über einen längeren Zeitraum ist aufgrund der Vielzahl von thermischen Nebenreaktionen problematisch. Eine Temperatur von 300 °C liegt darüber hinaus oberhalb der Ceiling Temperatur der Polyurethanbindung. Die Ceiling Temperatur ist als die Temperatur definiert, bei der die Depolymerisation im Gleichgewicht mit der Polymerisation steht.

Aufgabe der vorliegenden Erfindung war es daher, ein kontinuierliches und flexibles Verfahren zur Herstellung von Polyurethan bereitzustellen, das es ermöglicht Polyadditionsreaktion mit großer negativer Reaktionsenthalpie / kg Reaktionsmasse im industriellen Maßstab durchzuführen.

Diese Aufgabe wird gelöst durch ein Verfahren zur kontinuierlichen Herstellung thermoplastischen Polyurethans durch Umsetzung der Komponenten

(A) einem oder mehreren cycloaliphatischen, aliphatischen und/oder araliphatischen Polyisocyanaten,
(B) einem oder mehreren cycloaliphatischen, aliphatischen und/oder araliphatischen Polyolen, wobei die Gesamtmenge der Komponente (B) eine Hydroxylzahl von 600 mg KOH/g bis 1830 mg KOH/g bestimmt gemäß DIN EN ISO 4629-2:2016 aufweist,
(C) gegebenenfalls in Gegenwart von einem oder mehreren Katalysatoren, und/oder einem oder mehreren Zusatzstoffen,
dadurch gekennzeichnet, dass das Verfahren die Schritte umfasst:

a) Herstellen einer Mischung aus einer Teilmenge der Komponente (A), einer Teilmenge oder der Gesamtmenge der Komponente (B) und gegebenenfalls einer Teilmenge oder der Gesamtmenge der Komponente (C), wobei in Verfahrensschritt a) ein molares Verhältnis von Komponente (A) zu Komponente (B) von im Bereich von 0,6 : 1,0 bis 0,95 : 1,0 vorliegt;
b) Vermischen der im Verfahrensschritt a) hergestellten Mischung mit einem aus Verfahrensschritt
e) erhaltenen Prepolymer-Ausgangsteilstrom;
c) Zur Reaktion bringen der Mischung aus Verfahrensschritt b);
d) Aufteilen der in Schritt c) erhaltenen Reaktionsmischung in zwei Ausgangsteilströme;
e) Rückführen eines Ausgangsteilstromes aus Verfahrensschritt d) als Eingangsteilstrom für die Mischung im Verfahrensschritt b);
f) Vermischen der Restmenge der Komponente (A) und gegebenenfalls der Restmenge der Komponenten (B) und (C) mit dem verbleibenden Ausgangsteilstrom des Verfahrensschrittes d); und
g) Ausreagieren der in Verfahrensschritt f) erhaltenen Mischung zum Erhalt eines thermoplastischen Polyurethans.

Vorteilhafte Weiterbildungen sind in den Unteransprüchen angegeben. Sie können beliebig kombiniert werden, sofern sich aus dem Kontext nicht eindeutig das Gegenteil ergibt.

Überraschenderweise wurde gefunden, dass die Temperatur der Reaktionsmasse bei erfindungsgemäßer Ausführung sehr gut kontrolliert werden kann und es daher nicht zu temperaturbedingten Schädigungen, wie z.B. Stippenbildung oder Verfärbungen im Polyurethanprodukt kommt. Ebenfalls können durch die gute Temperaturkontrolle Nebenreaktionen kontrolliert und gegebenenfalls verhindert oder bevorzugt werden. Denkbar ist beispielsweise eine enge Kontrolle des Allophanatgehalts. Ohne durch die Theorie gebunden zu sein ergeben sich die erfindungsgemäßen Vorteile zum einen durch die kontrollierte Reaktion der mit den Prepolymeren, welche im Rahmen des Prozesses im Kreislauf zurückgeführt werden, homogen vermischten Monomere. Zum anderen wird anmelderseitig angenommen, dass zusätzlich die finale Kettenverlängerung über die späte Zugabe weiteren Diisocyanats mit der Prepolymermischung mit geeigneter Molekularmassenverteilung zu positiven Verarbeitungseigenschaften der erhältlichen Polymeren beiträgt. Weiterhin ermöglicht das erfindungsgemäße Verfahren eine gute Skalierbarkeit vom Labor in einen industriellen Maßstab.

Das erfindungsgemäße thermoplastische Polyurethan wird im Rahmen eines kontinuierlichen Verfahrens hergestellt. Ein kontinuierliches Verfahren zeichnet sich dadurch aus, dass über die Zeit gesehen eine kontinuierliche Zuführung der Edukte zum Reaktionssystem erfolgt. Zudem wird das entstehende Produkt über die Zeit gesehen kontinuierlich aus dem Reaktionssystem entfernt. Insbesondere ist das kontinuierliche Verfahren ein kontinuierliches Kreislaufverfahren, in welchen mindestens eine, während des Verfahrens entstehende Komponente an einen anderen, im Prozessverlauf früheren Reaktionsort, gefördert wird.

Das erfindungsgemäße thermoplastisches Polyurethan (TPU) ist ein Kunststoff, welcher sich bei Raumtemperatur vergleichbar klassischen thermoplastischen Kunststoffen wie beispielsweise Polyamiden, aromatischen Polyestern (wie z.B. Polyethylenterephthalat oder Polybutylenterephthalat), Polystyrol oder Polycarbonat verhält, bei Temperaturerhöhung aufschmilzt und sich dann verformen lässt.

Das Wort "ein" im Zusammenhang mit zählbaren Größen ist im Rahmen der vorliegenden Erfindung nur dann als Zahlwort zu verstehen, wenn dies ausdrücklich angegeben wird (z. B. durch den Ausdruck "genau ein"). Wenn im Folgenden beispielsweise von "einem Diol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Diolen enthält.

"Kontinuierliches Verfahren" oder "kontinuierliche Verfahren" im Sinne der Erfindung sind solche, bei denen über die Zeit gesehen eine kontinuierliche Zuführung der Edukte zum Reaktionssystem erfolgt. Zudem wird das entstehende Produkt über die Zeit gesehen kontinuierlich aus dem Reaktionssystem entfernt. Insbesondere ist das kontinuierliche Verfahren ein kontinuierliches Kreislaufverfahren, in welchen mindestens eine, während des Verfahrens entstehende Komponente an einen anderen, im Prozessverlauf früheren Reaktionsort, gefördert wird. Die kontinuierliche Verfahrensweise ist meistens von wirtschaftlichem Vorteil, da Reaktorstillstandszeiten infolge von Befüllungs- und Entleerungsprozessen vermieden werden.

Dem Fachmann ist bekannt, dass in der Polyurethanchemie Polymere und damit auch Prepolymere nicht als isolierte Spezies vorliegen, sondern immer als Gemische von Molekülen verschiedener Anzahl von Wiederholeinheiten und damit unterschiedlichen Molekulargewichten und gegebenenfalls auch unterschiedlicher Endgruppen vorliegen. Sowohl die Anzahl der Wiederholeinheiten pro Molekül als auch gegebenenfalls die Endgruppen sind in der Regel statistisch verteilt.

Im Rahmen der vorliegenden Erfindung wird unter dem Begriff "Hydroxy-terminiertes Prepolymer" ein Prepolymergemisch verstanden, in dem mindestens 90 Anzahl-% der Molekülenden eine Hydroxygruppe aufweisen und die verbleibenden 10 Anzahl-% Molekülenden weitere Hydroxy-Gruppen, NCO-Gruppen und/oder nicht-reaktive Gruppen aufweisen. Unter einer "nicht-reaktiven Gruppe" wird im Rahmen der vorliegenden Erfindung eine Gruppe verstanden, die unter den erfindungsgemäßen Reaktionsbedingungen weder mit NCO-Gruppen, noch mit OH-Gruppen in einer Zeiteinheit reagiert, die der erfindungsgemäßen Reaktionszeit entspricht. Eine nicht-reaktive Gruppe kann beispielsweise aus einer reaktiven NCO-Gruppe oder OH-Gruppe durch Reaktion mit geeigneten Reaktionspartnern (Kettenabbrecher) in eine nicht-reaktive Gruppe umgewandelt werden. Als Kettenabbrecher eignen sich alle monofunktionellen Verbindungen, die unter den erfindungsgemäßen Reaktionsbedingungen entweder mit einer Isocyanatgruppe oder mit einer Hydroxygruppe reagieren, beispielsweise Mono-Alkohole, wie Methanol, Mono-Amine, wie Diethylamin und Monoisocyanate, wie Butylisocyanat. Das Hydroxy-terminierte Prepolymer kann beispielsweise an einem Molekülende eine Hydroxygruppe aufweisen und an dem oder den anderen Molekülenden beispielsweise eine Alkylgruppe. Wenn im Rahmen der vorliegenden Erfindung von einem Hydroxy-terminierten Prepolymer gesprochen wird, ist hiermit auch immer ein Gemisch aus dem mindestens einen Hydroxy-terminierten Prepolymer und einem nicht-reaktiv terminierten Prepolymer umfasst. Ferner kann es sich aufgrund der Statistik der Reaktion abgesehen von Nebenreaktionen auch um ein Gemisch von nicht Hydroxy-terminierten bis zu zweifach Hydroxy-terminierten Prepolymeren handeln. Vorzugsweise handelt es sich überwiegend um ein Gemisch von zweifach Hydroxy-terminierten Prepolymeren. Erfindungsgemäß kann es sich bei dem mindestens einen Hydroxy-terminierten Prepolymer auch um ein Gemisch von mindestens einem Hydroxy-terminierten Prepolymer und mindestens einem nicht-reaktiv terminierten Prepolymer handeln.

In Rahmen der vorliegenden Erfindung wird unter einem "nicht-reaktiv terminierten Prepolymer" oder einem "nicht-reaktiv terminierten Polymer" ein Prepolymer bzw. Polymer verstanden, bei dem die reaktiven Gruppen (NCO-Gruppen oder OH-Gruppen) durch Reaktion mit geeigneten Reaktionspartnern (Kettenabbrecher) in chemische Gruppen umgewandelt wurden, die unter den genannten Reaktionsbedingungen weder mit NCO-Gruppen, noch mit OH-Gruppen reagieren. Als Kettenabbrecher eignen sich beispielsweise Mono-Alkohole wie Methanol, Mono-Amine wie Diethylamin und Monoisocyanate wie Butylisocyanat. Der molare Anteil der Kettenabbrecher kann beispielsweise von 0,001 Mol-% bis 2 Mol-% und bevorzugt von 0,002 Mol-% bis 1 Mol-% betragen, jeweils bezogen auf die Gesamtstoffmenge der entsprechenden Monomerkomponente.

Unter Polyisocyanaten werden in diesem Zusammenhang organische Verbindungen mit zwei oder mehr Isocyanatgruppen verstanden, wobei es unerheblich ist, ob diese mittels Phosgenierung oder nach phosgenfreien Verfahren erhalten wurden. Beispiele für geeignete Polyisocyanate mit drei Isocyanatgruppen sind Triphenylmethan-4,4',4"-triisocyanat oder Isocyanatomethyl-1,8-octandiisocyanat (TIN).

Im Rahmen der vorliegenden Erfindung wird unter dem Begriff "Polyol" jede organische monomere oder polymere Substanz verstanden, die zwei oder mehr Hydroxylgruppen aufweist, welche in der Lage sind mit einer NCO-Gruppe zu reagieren.

Bevorzugt bedeuten erfindungsgemäß die Ausdrücke "umfassend" oder "enthaltend", "im Wesentlichen bestehend aus" und besonders bevorzugt "bestehend aus".

Im Verfahrensschritt a) erfolgt das Herstellen einer Mischung aus der Komponente (A), der Komponente (B) und gegebenenfalls der Komponente (C). In diesem Schritt werden die einzelnen Monomer-Komponenten und gegebenenfalls die Komponente (C) unter Rühren oder den Einsatz von Scherkräften zusammengegeben, so dass eine Verteilung der einen in der anderen Komponente erhalten wird. Je nach der gegenseitigen Löslichkeit der Komponenten kann die Mischung ein- oder mehrphasig vorliegen, für die meisten Stoffsysteme wird sie zweiphasig vorliegen. Zweckmäßigerweise kann dieser Verfahrensschritt bei einer Temperatur erfolgen, in welcher die beiden Komponenten noch nicht im nennenswerten Umfang miteinander reagieren. Die Monomere reagieren noch nicht im nennenswerten Umfang, wenn mindestens 70 Mol-%, bevorzugt mindestens 90 Mol-%, noch bevorzugter mindestens 98 Mol-% der reaktionsfähigen Monomere noch nicht miteinander reagiert haben. Die Temperaturen können zum Erhalt der Mischung der Monomere beim Vermischen in einem Temperaturbereich von beispielsweise 20 °C bis 100 °C gehalten werden. Bevorzugt kann die Verweilzeit bei diesem Mischvorgang, bevor die Mischung in den nächsten Prozessschritt übergeht, kleiner als eine Minute, bevorzugt kleiner als 10 Sekunden gehalten werden. Ein wesentliches Verfahrensmerkmal ist zudem, dass nur eine Teilmenge an Komponente (A) zu diesem Zeitpunkt mit einer Teilmenge oder der Gesamtmenge der Komponente (B) vermischt wird. Eine Teilmenge von Komponente (A) bedeutet, dass zu einem späteren Verfahrenszeitpunkt noch weitere, signifikante Mengen von Komponente (A), in den Prozess gefahren werden. Eine weitere Menge von Komponente (A) ist signifikant, wenn diese mehr als 2,5 Mol-%, bevorzugt mehr als 5 Mol-% und noch bevorzugter mehr als 10 Mol-% der gesamten Menge an Komponente (A) ausmacht.

Im Verfahrensschritt b) erfolgt das Vermischen der im Verfahrensschritt a) hergestellten Mischung mit einem aus Verfahrensschritt e) erhaltenen Prepolymer-Ausgangsteilstrom. In diesem Verfahrensschritt wird also eine im Wesentlichen aus Monomeren der Komponenten (A) und (B) bestehende Mischung mit einem Strom aus einer späteren Prozessphase vermischt, welcher im Wesentlichen nicht aus Monomeren der Komponenten (A) und (B), sondern aus Prepolymeren beider Monomere besteht. Prepolymere sind dabei Reaktionsprodukte aus der Reaktion von Monomeren der Komponente (A) mit Monomeren der Komponente (B), wobei der durchschnittliche Polymerisationsgrad *n* der Prepolymere in einem Bereich von 1,5 bis 19, bevorzugt im Bereich von 2 bis 9 und besonders bevorzugt im Bereich von 3,2 bis 6 liegt wobei $n = \frac{x}{1-x}$ ist, und wobei *x* das Verhältnis der Isocyanat-Gruppen der Komponente (A) zu den Hydroxy-Gruppen der Komponente (B) ist.

Bei den Prepolymeren handelt es sich vorzugsweise im Wesentlichen um Hydroxy-terminierte Prepolymere. "Im Wesentlichen" bedeutet in diesem Zusammenhang, dass mindestens 95 Mol-%, vorzugsweise mindestens 98 Mol-%, besonders bevorzugt mindestens 99 Mol-% und noch bevorzugter mindestens 99,5 Mol-% der Prepolymere Hydroxy-terminierte Prepolymere sind.

Im Verfahrensschritt c) erfolgt das zur Reaktion Bringen der Mischung aus Verfahrensschritt b). Das zur Reaktion bringen beinhaltet dabei, dass aus den einzelnen Monomeren der Komponenten (A) und (B) größere Moleküle durch Polyaddition entstehen. Das zur Reaktion bringen führt aber nicht zwangsläufig dazu, dass die gesamten vorliegenden Monomere in Polymerketten eingebaut werden. Wenn ein Überschuss an Komponente (B) vorliegt, wird vor allem noch Komponente (B) in der entstehenden Reaktionsmischung vorliegen. Bevorzugt liegt der Restgehalt an Monomeren bezogen auf die gesamte Stoffmenge an allen eingesetzten Monomeren, welche nicht in Ketten eingebaut ist, in einem Bereich von 0,12 Mol-% bis 16 Mol-% , bevorzugt in einem Bereich von 0,52 Mol-% bis 12 Mol-% und noch bevorzugter in einem Bereich von 7,6 Mol-% bis 1,1 Mol-%. Zweckdienlicherweise kann die Mischung in diesem Schritt über geeignete Verfahrensmittel temperiert werden.

Im Verfahrensschritt d) erfolgt das Aufteilen der in Schritt c) erhaltenen Reaktionsmischung in zwei Ausgangsteilströme. Nach Bildung der Prepolymere aus den Monomeren der Komponenten (A) und (B) wird die erhaltene Reaktionsmischung im Ausgang dieser Reaktionsstufe aufgeteilt und über zwei unterschiedliche Leitungen an zwei verschiedene Reaktionsorte geleitet. Eine Leitung enthält einen Teil des Ausgangsstromes und führt diesen in eine frühere Verfahrensstufe im Kreis zurück, während der restliche Teil in den folgenden Verfahrensschritt gegeben wird. Ersteres ist Teil des Verfahrensschrittes e), in welchem das Rückführen eines Ausgangsteilstromes aus Verfahrensschritt d) als Eingangsteilstrom für die Mischung im Verfahrensschritt b) erfolgt. Ein Teil des Prepolymers aus der Verfahrensstufe d) wird also in den Verfahrensschritt b), also zur noch nicht reagierten Mischung der Monomere der Komponenten (A) und (B) gegeben.

Die Restmenge des Ausgangsstromes aus dem Verfahrensschritt d) wird im Verfahrensschritt f) mit der Restmenge an Komponente (A) und gegebenenfalls mit dem Rest der Komponente (B) vermischt und bildet den weiteren Prozessstrom d).

Im Verfahrensschritt g) erfolgt das Ausreagieren der in Verfahrensschritt f) erhaltenen Mischung zum Erhalt eines thermoplastischen Polyurethans. Das Ausreagieren kann dabei beispielsweise durch Temperaturen der Prozessströme induziert werden und beinhaltet das weitere Reagieren der Monomere mit Prepolymeren, vorzugsweise Hydroxy-terminierten Prepolymeren, unter Ausbildung von Polymeren. Das Ausreagieren kann dabei durch die Temperatur der Mischung, durch Temperaturerhöhung oder auch durch eine Temperaturerhöhung in Verbindung mit einer mechanischen Behandlung, beispielsweise in Form einer Extrusion erfolgen. Neben der Scherbelastung können auch höhere oder tiefere Drücke zu Einsatz kommen. Es ist auch möglich, innerhalb dieses Schrittes weitere Maßnahmen, wie beispielsweise eine Entgasung durch Anlegen eines Unterdrucks, durchzuführen. Dies kann zur Vergleichmäßigung der Eigenschaften des Polymers beitragen. Das Material kann auch über nachgeschaltete Aufarbeitungsschritte weiter konditioniert werden. Beispielsweise durch Kühlen und Erstarren, bevorzugt mittels Wasserkühlung, und Überführen in ein Schüttgut durch einen zusätzlichen Granulationsschritt.

Als Komponente (A) eignen sich alle dem Fachmann bekannten aliphatischen, cycloaliphatischen, und/oder araliphatischen Polyisocyanate, insbesondere monomere Diisocyanate. Geeignete Verbindungen sind vorzugsweise solche des Molekulargewichtsbereiches von ≥ 140 g/mol bis ≤ 400 g/mol, wobei es unerheblich ist, ob diese mittels Phosgenierung oder nach phosgenfreien Verfahren erhalten wurden. Die Polyisocyanate und / oder dessen Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei 1,6-Hexamethylendiamin und 1,5-Pentamethylendiamin aus biologischen Quellen, vorzugsweise durch bakterielle Fermentation, gewonnen werden.

Wenn im Rahmen der vorliegenden Erfindung von Komponente (A) gesprochen wird, kann es sich auch um ein Gemisch von mindestens zwei Komponenten (A) handeln.

Beispiele für geeignete aliphatische Diisocyanate sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan und 1,10-Diisocyanatodecan.

Beispiele für geeignete cycloaliphatische Diisocyanate sind 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan und 1,3-Dimethyl-5,7-diisocyanatoadamantan.

Beispiele für geeignete araliphatische Diisocyanate sind 1,3- und 1,4-Bis-(isocyanatomethyl)benzol (Xylylendiisocyanat; XDI), 1,3- und 1,4-Bis(1-isocyanato-1-methylethyl)-benzol (TMXDI).

Weitere ebenfalls geeignete Diisocyanate finden sich darüber hinaus beispielsweise in HOUBEN-WEYL "Methoden der organischen Chemie", Band E20 "Makromolekulare Stoffe", Georg Thieme Verlag, Stuttgart, New York 1987, S. 1587-1593 oder in Justus Liebigs Annalen der Chemie Band 562 (1949) S. 75 - 136.

In einer bevorzugten Ausführungsform des erfindungsgemäßen Verfahrens werden als Komponente (A) ein oder mehrere aliphatische und / oder cycloaliphatische, monomere Diisocyanate mit einem Molekulargewicht im Bereich von ≥ 140 g/mol bis ≤ 400 g/mol eingesetzt.

Im Rahmen der vorliegenden Erfindung wird unter dem Begriff "monomeres Diisocyanat" ein Diisocyanat verstanden, welches keine dimeren, trimeren etc. Strukturen aufweist, Teil von dimeren, trimeren etc. Strukturen ist und/oder ein Reaktionsprodukt von einer NCO-Gruppe mit einer NCO-reaktiven Gruppe ist, wie beispielsweise Urethan-, Harnstoff-, Carbodiimid-, Acylharnstoff-, Amid-, Isocyanurat-, Allophanat-, Biuret-, Oxadiazintrion-, Uretdion- und/oder Iminooxadiazindionstrukturen.

In einer weiteren bevorzugten Ausführungsform des erfindungsgemäßen Verfahrens werden als Komponente (A) ein oder mehrere monomere Diisocyanate eingesetzt, ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen aus mindestens 2 hieraus, vorzugsweise ausgewählt aus der Gruppe bestehend aus 1,4-Diisocyanatobutan (BDI), 1,5-Diisocyanatopentan (PDI), 1,6-Diisocyanatohexan (HDI) und/oder Mischungen aus mindestens 2 hieraus und besonders bevorzugt ausgewählt aus der Gruppe bestehend aus 1,5-Diisocyanatopentan (PDI), 1,6-Diisocyanatohexan (HDI) und/oder Mischungen aus mindestens 2 hieraus.

Als Komponente (B) werden erfindungsgemäß eine oder mehrere cycloaliphatische, aliphatische und/oder araliphatische Polyole mit einer Hydroxylzahl von 600 mg KOH/g bis 1830 mg KOH/g, bestimmt gemäß DIN EN ISO 4629-2:2016, eingesetzt. Die Polyole und / oder dessen Vorläuferverbindungen können aus fossilen oder biologischen Quellen gewonnen worden sein. Die aliphatischen Polyole umfassen insbesondere auch heteroaliphatische Polyole, d.h. Polyole bei denen CH-Gruppen und / oder $CH_2$-Gruppen der aliphatische Kette durch Heteroatome wie N, S oder O ersetzt sind. Beispiele für erfindungsgemäße heteroaliphatische Polyole sind Ethylenglykol, Butylenglykol, Diethylenglykol, $HOCH_2CH_2SCH_2CH_2OH$, $N(CH_2OH)_3$ und $HOCH_2N(CH_3)CH_2OH$. Weitere Beispiele für geeignete Polyole sind, 1,2-Propandiol, 1,3-Propandiol, 1,3-Butandiol, 1,4-Butandiol, 1,6-Hexandiol und Isomere, Neopentylglykol, Trimethylolpropan, Glycerin, Erythrit, Pentaerythrit, Trimethylolbenzol oder Trishydroxyethylisocyanurat.

In einer bevorzugten Ausführungsform des erfindungsgemäßen Verfahrens werden als Komponente (B) eine oder mehrere cycloaliphatische, aliphatische und/oder araliphatische Polyole mit einer Hydroxylzahl von 600 mg KOH/g bis 1830 mg KOH/g bestimmt gemäß DIN EN ISO 4629-2:2016 eingesetzt, vorzugsweise werden als Komponente (B) ein oder mehrere cycloaliphatische und / oder aliphatische Diole, mit einer Hydroxylzahl von 600 mg KOH/g bis 1830 mg KOH/g bestimmt gemäß DIN EN ISO 4629-2:2016, eingesetzt.

In einer weiteren bevorzugten Ausführungsform des erfindungsgemäßen Verfahrens werden als Komponente (B) ein oder mehrere Diole eingesetzt, ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, Diethylenglykol, und/oder Mischungen aus mindestens 2 hieraus, vorzugsweise ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, und/oder Mischungen aus mindestens 2 hieraus, besonders bevorzugt ausgewählt aus der Gruppe bestehend aus 1,2-Ethandiol, 1,2-Propandiol, 1,3-Propandiol, 1,2-Butandiol, 1,3-Butandiol, 1,4-Butandiol und/oder Mischungen aus mindestens 2 hieraus.

In einer weiteren bevorzugten Ausführungsform des erfindungsgemäßen Verfahrens werden die Hydroxy-terminierten Prepolymere im Wesentlichen durch Polyaddition von Kombinationen aus Komponente (A) und Komponente (B) gebildet ausgewählt aus der Gruppe bestehend aus 1,4-Diisocyanatobutan mit 1,2-Ethandiol, 1,4-Diisocyanatobutan mit 1,2- und/oder 1,3-Propandiol, 1,4-Diisocyanatobutan mit 1,2-, 1,3- und/oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und/oder 1,3-Propandiol, 1,5-Diisocyanatopentan mit 1,2-, 1,3- und/oder 1,4-Butandiol, 1,5-Diisocyanatopentan mit 1,5-Pentandiol, 1,5-Diisocyanatopentan mit 1,6-Hexandiol, 1,6-Diisocyanatohexan mit 1,2-Ethandiol, 1,6-Diisocyanatohexan mit 1,2- und/oder 1,3-Propandiol, 1,6-Diisocyanatohexan mit 1,2-, 1,3- und/oder 1,4-Butandiol, 1,6-Diisocyanatohexan mit 1,5-Pentandiol und 1,6-Diisocyanatohexan mit 1,6-Hexandiol, vorzugsweise ausgewählt werden aus der Gruppe bestehend aus 1,4-Diisocyanatobutan mit 1,2-Ethandiol, 1,4-Diisocyanatobutan mit 1,2- und/oder 1,3-Propandiol, 1,4-Diisocyanatobutan mit 1,2-, 1,3- und/oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und/oder 1,3-Propandiol, 1,5-Diisocyanatopentan mit 1,2-, 1,3- und/oder 1,4-Butandiol, 1,5-Diisocyanatopentan mit 1,5-Pentandiol, 1,6-Diisocyanatohexan mit 1,2-Ethandiol, 1,6-Diisocyanatohexan mit 1,2- und/oder 1,3-Propandiol und 1,6-Diisocyanatohexan mit 1,2-, 1,3- und/oder 1,4-Butandiol, besonders bevorzugt ausgewählt werden aus der Gruppe bestehend aus 1,5-Diisocyanatopentan mit 1,2- Butandiol, 1,3- Butandiol, 1,4-Butandiol und / oder Mischungen aus mindestens 2 hieraus und 1,6-Diisocyanatohexan mit 1,2- Butandiol, 1,3-Butandiol, 1,4-Butandiol und / oder Mischungen aus mindestens 2 hieraus.

In einer weiteren bevorzugten Ausführungsform des erfindungsgemäßen Verfahrens werden die Hydroxy-terminierten Prepolymere vorzugsweise durch Umsetzung von im Wesentlichen 1,6-Diisocyanatohexan mit 1,4- Butandiol erhalten.

In einer weiteren bevorzugten Ausführungsform des erfindungsgemäßen Verfahrens weisen die Prepolymere, vorzugsweise die Hydroxy-terminierten Prepolymere, eine aus den Funktionalitäten der Edukte berechnete mittlere OH-Funktionalität von 1,8 bis 2,1, bevorzugt 1,95 bis 2,05, besonders bevorzugt 1,97 bis 2,0, ganz besonders bevorzugt 1,975 bis 2,0 auf.

In einer weiteren bevorzugten Ausführungsform des erfindungsgemäßen Verfahrens das erfindungsgemäße thermoplastische Polyurethan im Wesentlichen durch Polyaddition von Kombinationen aus Komponente (A) und Komponente (B) gebildet ausgewählt aus der Gruppe bestehend aus 1,4-Diisocyanatobutan mit 1,2-Ethandiol, 1,4-Diisocyanatobutan mit 1,2- und/oder 1,3-Propandiol, 1,4-Diisocyanatobutan mit 1,2-, 1,3- und/oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und/oder 1,3-Propandiol, 1,5-Diisocyanatopentan mit 1,2-, 1,3- und/oder 1,4-Butandiol, 1,5-Diisocyanatopentan mit 1,5-Pentandiol, 1,5-Diisocyanatopentan mit 1,6-Hexandiol, 1,6-Diisocyanatohexan mit 1,2-Ethandiol, 1,6-Diisocyanatohexan mit 1,2- und/oder 1,3-Propandiol, 1,6-Diisocyanatohexan mit 1,2-, 1,3- und/oder 1,4-Butandiol, 1,6-Diisocyanatohexan mit 1,5-Pentandiol und 1,6-Diisocyanatohexan mit 1,6-Hexandiol, vorzugsweise ausgewählt werden aus der Gruppe bestehend aus 1,4-Diisocyanatobutan mit 1,2-Ethandiol, 1,4-Diisocyanatobutan mit 1,2- und/oder 1,3-Propandiol, 1,4-Diisocyanatobutan mit 1,2-, 1,3- und/oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und/oder 1,3-Propandiol, 1,5-Diisocyanatopentan mit 1,2-, 1,3- und/oder 1,4-Butandiol, 1,5-Diisocyanatopentan mit 1,5-Pentandiol, 1,6-Diisocyanatohexan mit 1,2-Ethandiol, 1,6-Diisocyanatohexan mit 1,2- und/oder 1,3-Propandiol und 1,6-Diisocyanatohexan mit 1,2-, 1,3- und/oder 1,4-Butandiol, besonders bevorzugt ausgewählt werden aus der Gruppe bestehend aus 1,5-Diisocyanatopentan mit 1,2- Butandiol, 1,3- Butandiol, 1,4-Butandiol und / oder Mischungen aus mindestens 2 hieraus und 1,6-Diisocyanatohexan mit 1,2-Butandiol, 1,3-Butandiol, 1,4-Butandiol und / oder Mischungen aus mindestens 2 hieraus.

In einer weiteren bevorzugten Ausführungsform des erfindungsgemäßen Verfahrens wird das thermoplastische Polyurethan vorzugsweise durch Umsetzung von im Wesentlichen 1,6-Diisocyanatohexan mit 1,4- Butandiol erhalten.

"Im Wesentlichen" bedeutet in diesem Zusammenhang, dass mindestens 95 Mol-%, vorzugsweise mindestens 98 Mol-%, besonders bevorzugt mindestens 99 Mol-% und noch bevorzugter mindestens 99,5 Mol-%, noch mehr bevorzugter mindestens 99,8 Mol-% und am Bevorzugtesten 100 Mol-% der Hydroxy-terminierte Prepolymere aus den genannten Monomer-Komponenten (A) und (B) aufgebaut sind.

Im erfindungsgemäßen Verfahren können die Komponenten (A) und (B) gegebenenfalls in Gegenwart von einem oder mehreren Katalysatoren und/oder Zusatzstoffen umgesetzt werden, vorzugsweise in Gegenwart von einem oder mehreren Schwermetall-freien Katalysatoren und/oder Zusatzstoffen.

Zur Reaktionsbeschleunigung können beispielsweise übliche aus der Polyurethanchemie bekannte Katalysatoren zum Einsatz kommen. Beispielhaft seien hier genannt tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N' -dimethylaminopiperazin, 1,8-Diazabicyclo(5.4.0)undecen-7 (DBU), 1,2-Dimethylimidazol, 2-Methylimidazol, N,N-Dimethylimidazol-ß-phenylethylamin, 1,4-Diazabicyclo-(2,2,2)-octan, Bis-(N,N-dimethylaminoethyl)adipat; Alkanolaminverbindungen, wie z. B. Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin und/oder Bis(dimethylaminoethyl)ether; Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)-Wismut(III)-2-ethylhexanoat, Wismut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat; Amidine, wie z. B. 2,3-Dimethyl-3,4,5,6-tetrahydropyrimidin; Tetraalkylammoniumhydroxide, wie z. B. Tetramethylammoniumhydroxid; Alkalihydroxide, wie z. B. Natriumhydroxid und Alkalialkoholate, wie z. B. Natriummethylat und Kaliumisopropylat, sowie Alkalisalze von langkettigen Fettsäuren mit 10 bis 20 C-Atomen und gegebenenfalls seitenständigen OH-Gruppen.

Bevorzugt unter den Katalysatoren sind die nach dem Stand der Technik bekannten und üblichen tertiären Amine, wie z. B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche Schwermetall-freie Katalysatoren.

Im Allgemeinen wird der Katalysator in Mengen von 0,001 bis 2,0 Gew.-%, bevorzugt von 0,005 bis 1,0 Gew.-% besonders bevorzugt von 0,01 bis 0,1 Gew.-% bezogen auf die Komponente (A) eingesetzt. Der Katalysator kann in Substanz eingesetzt werden oder gelöst in der Komponente (B). Ein Vorteil ist hierbei, dass das dann erhaltene thermoplastische Polyurethan keine Verunreinigungen durch gegebenenfalls mitverwendete Katalysatorlösungsmittel enthält. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen. Alternativ können aber auch Mischungen des bzw. der Katalysatoren mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,001 Gew.-%.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3-Methoxy-n-butylacetat, Propylenglykoldiacetat, Aceton, Methylethylketon, Methylisobutylketon, Cyclohexanon, Lactone, wie β-Propiolacton, γ-Butyrolacton, ε-Caprolacton und ε -Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch beim erfindungsgemäßen Verfahren Katalysatorlösungsmittel zum Einsatz kommen, die gegenüber Isocyanaten reaktive Gruppen tragen und in das Prepolymer eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylenglykol-monomethylether, Ethylenglykolmonoethylether, Ethylenglykolmonobutylether, Diethylenglykolmonomethylether, Diethylenglykolmonothylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

In einer bevorzugten Ausführungsform werden die Komponenten (A) und (B) im erfindungsgemäßen Verfahren ohne einen Katalysator miteinander umgesetzt. Es wurde festgestellt, dass sich das erfindungsgemäße thermoplastische Polyurethan ohne Einsatz von Polymerisationskatalysatoren erhalten lassen. Dies ist überraschend, da üblicherweise zum Erhalt eines homogenen thermoplastischen Polyurethans Katalysatoren eingesetzt werden.

Neben den Komponenten (A) und (B) sowie den Katalysatoren können auch Zusatzstoffe eingesetzt werden. Dabei kann es sich beispielsweise um im Bereich der Polyurethantechnologie gängige Zusatzstoffe wie Farbstoffe, Füllstoffe, Verarbeitungshilfsmittel, Weichmacher, Nucleierungsmittel, Stabilisatoren, Flammschutzmittel, Entformungsmittel oder verstärkende Additive handeln. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Zusatzstoffe mehrerer Typen zu verwenden.

In einer bevorzugten Aufführungsform können als Zusatzstoffe auch geringe Mengen aromatischer Diisocyanate eingesetzt werden in Anteilen bis zu 2 Gew.-% bezogen auf die Stoffmenge der Komponente (A). Beispiele für geeignete aromatische Diisocyanate sind 2,4- und 2,6-Diisocyanatotoluol (TDI), 2,4'- und 4,4'-Diisocyanatodiphenylmethan (MDI) und 1,5-Diisocyanatonaphthalin.

In einer bevorzugten Ausführungsform werden keine aromatischen Diisocyanate und keine Polyisocyanate (gemäß obiger Definition) im erfindungsgemäßen Verfahren eingesetzt.

In einer anderen bevorzugten Ausführungsform können als Zusatzstoffe in geringen Mengen auch übliche gegenüber Isocyanaten reaktive mono-, di-, tri- oder polyfunktionelle Verbindungen in Anteilen bis zu 2 Gew.-%, bezogen auf das Gesamtgewicht des Prepolymers bzw. der Prepolymere, z. B. als Kettenabbrecher, Hilfsmittel oder Entformungshilfen, eingesetzt werden. Beispielhaft genannt seien Alkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol und Stearylalkohol. Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit. Amine wie Butylamin und Stearylamin oder Thiole. Diese Zusatzstoffe können bis zu einer Menge zugesetzt werden, bei der die erfindungsgemäßen Grenzen der OH-Funktionalität eingehalten werden.

In einer bevorzugten Ausführungsform des erfindungsgemäßen Verfahrens erfolgt die Umsetzung der Komponenten (A), (B) und gegebenenfalls (C) lösungsmittelfrei.

Unter einem "lösungsmittelfreien Verfahren" im Rahmen der vorliegenden Erfindung wird die Umsetzung der Komponenten (A) und (B) ohne zusätzliche Verdünnungsmittel, wie beispielsweise organische Lösungsmittel oder Wasser verstanden, d.h. die Komponenten (A) und (B) werden bevorzugt unverdünnt miteinander zur Reaktion gebracht. Die Komponente (C) kann gegebenenfalls in geeigneten Verdünnungsmittel vorliegen und als Lösung oder Dispersion zu den Komponenten (A) und/oder (B) zugegeben werden. Dabei ist das Verfahren im Sinne der vorliegenden Erfindung noch als lösungsmittelfrei anzusehen, wenn der Gehalt des Lösungsmittels bis 1 Gew.-%, vorzugsweise bis 0,1 Gew.-%, noch bevorzugter bis 0,01 Gew.-% bezogen auf das Gesamtgewicht der Reaktionsmischung beträgt. Unter einem Lösungsmittel wird dabei eine Substanz verstanden in der wenigstens eine der Komponenten (A) und (B) und gegebenenfalls (C) gelöst, dispergiert, suspendiert oder emulgiert werden kann, welche aber nicht mit einer der Komponenten (A) und (B) und gegebenenfalls (C) oder mit dem/den Hydroxy-terminierten Prepolymeren reagiert. Im Rahmen der vorliegenden Erfindung, wird ein nicht-reaktiv terminiertes Prepolymer und/ oder nicht-reaktiv terminiertes Polymer, welche nicht mit einer der Komponenten (A) und (B) und gegebenenfalls (C) oder mit dem/den Hydroxy-terminierten Prepolymeren der Reaktionsmischung reagieren, nicht als "Lösungsmittel" angesehen.

In einer weiteren bevorzugten Ausführungsform des erfindungsgemäßen Verfahrens wird in Verfahrensschritt a) die Gesamtmenge der Komponente (B) eingesetzt.

In einer weiteren bevorzugten Ausführungsform des erfindungsgemäßen Verfahrens werden die Komponenten (A) und (B) insgesamt über alle Verfahrensstufen in einem molaren Verhältnis im Bereich von 0,9 : 1,0 bis 1,2 : 1,0 eingesetzt.

In einer weiteren bevorzugten Ausführungsform des erfindungsgemäßen Verfahrens beträgt die Temperatur im Verfahrensschritt a) größer oder gleich 25 °C und kleiner oder gleich 60 °C. Zum Erhalt einer möglichst gleichmäßigen Mischung der Monomeren der Komponenten (A) und (B) mit einem geringen Anteil schon anreagierter Monomere hat sich oben angegebener Temperaturbereich als besonders geeignet herausgestellt. Niedrigere Temperaturen können unvorteilhaft sein, da die Viskosität der Bestandteile dann zu hoch und nur eine nicht ausreichende Vormischung erhältlich ist. Weiterhin können kurzkettige Diole ausfrieren, vor allem wenn es sich um 1,4-Butandiol handelt. Höhere Temperaturen können nachteilig sein, da dann der Anteil schon anreagierter Monomere zu groß wird. Bevorzugte Temperaturbereiche innerhalb dieses Schrittes können bevorzugt zwischen größer oder gleich 35 °C und kleiner oder gleich 55 °C, noch bevorzugter zwischen größer oder gleich 40 °C und kleiner oder gleich 50 °C liegen.

In einer weiteren bevorzugten Ausführungsform des erfindungsgemäßen Verfahrens beträgt die Temperatur im Verfahrensschritt c) größer oder gleich 170 °C und kleiner oder gleich 190 °C. Zur Ausbildung einer ausreichenden und geeigneten Prepolymer-Konzentration und-Zusammensetzung hat sich oben angegebener Temperaturbereich als besonders geeignet herausgestellt. Ohne durch die Theorie gebunden zu sein scheint es, dass sich innerhalb angemessener Verweilzeiten eine enge Molekularmassenverteilung an reagierten Prepolymeren ergibt. Bevorzugt können diese Prepolymere mit einer Verweilzeit im oben angegebenen Temperaturbereich von 5 Minuten bis zu 35 Minuten erhalten werden.

In einer weiteren bevorzugten Ausführungsform des erfindungsgemäßen Verfahrens wird zumindest der Verfahrensschritt g) in einem Extruder durchgeführt. Vorzugsweise werden die Verfahrensschritte f) und g) in einem Extruder durchgeführt. Das ausreagierte thermoplastische Polymer wird aus dem Verfahrensschritt g) extrudiert. Zum Erhalt eines homogenen Polymers hat es sich als geeignet herausgestellt, dass das Ausreagieren der verbliebenen Teilmenge von Komponente (A) mit den schon gebildeten Prepolymeren zu den Polymeren nicht nur auf Basis einer Temperaturerhöhung, sondern unter gleichzeitiger Anwendung von Scherkräften erfolgt. Die Scherkräfte können neben der gleichzeitigen Förderung der homogenen Mischung der Schmelze dazu beitragen, dass eine besondere Ausrichtung der gebildeten Polymerketten erhalten wird.

Geeignete Extruder sich beispielsweise gleichlaufende Mehrwellenextruder wie Doppel- oder Vierwellenextruder oder Ringextruder, gegenläufige Mehrwellenextruder, Ko-Kneter oder Planetwalzenextruder und Rotor-Stator Systeme.

In einer weiteren bevorzugten Ausführungsform des erfindungsgemäßen Verfahrens betragen die Temperaturen im Verfahrensschritt g) größer oder gleich 180 °C und kleiner oder gleich 260 °C. Vorzugsweise betragen die Temperaturen der Gehäuse des Extruders, die direkt mit der Polymerschmelze in Berührung stehen, im Verfahrensschritt g) größer oder gleich 180 °C und kleiner oder gleich 260 °C. In diesem Temperaturbereich ist die Reproduzierbarkeit besonders hoch und die thermische Belastung besonders gering, so dass auch wenige Nebenreaktionen auftreten.

Die Konzentration an freien Monomeren ist nach diesem Temperaturschritt äußerst gering und es besteht nicht die Gefahr einer ungewollten temperaturinduzierten Kettendegradation. Als Resultat ergibt sich eine reproduzierbare Molekulargewichtsverteilung, welche zu den geeigneten Polymereigenschaften beiträgt. Höhere Temperaturen können nachteilig sein, da dann die Gefahr eines unerwünschten Polymerabbaus steigt. Niedrigere Temperaturen können ungünstig sein, da dann die Verweilzeit zum Erhalt eines weitgehend ausreagierten Polymers zu lang wird.

In einer weiteren bevorzugten Ausführungsform des Verfahrens beträgt molare Verhältnis der im Verfahrensschritt a) und im Verfahrensschritt f) eingesetzten Teilmengen von Komponente (A), berechnet als Mol Komponente (A) in a) / [Mol Komponente (A) in f) plus Mol Komponente (A) in a)], größer oder gleich 0,9 und kleiner oder gleich 0,65. Dieses Verhältnis kann dazu beitragen eine besonders homogene Mischung im Extrusionsschritt zu erhalten.

In einer weiteren bevorzugten Ausführungsform des erfindungsgemäßen Verfahrens beträgt das Gewichtsverhältnis der im Verfahrensschritt b) zurückgeführten Prepolymere bezogen auf die Menge an eingesetzter Mischung aus Komponente (A) und Komponente (B) größer oder gleich 10 und kleiner oder gleich 30. Ohne durch die Theorie gebunden zu sein kann dieses Rücklauf- zu Monomerdosierungs-Verhältnis einen besonders hohen Einfluss auf die Temperaturführung haben. Im speziellen ist es außerdem sehr vorteilhaft, dass die Temperatur in diesem Verfahrensschritt innerhalb enger Grenzen gehalten wird. Die minimale Temperatur in diesem Verfahrensschritt liegt typischerweise nach der Mischung der Monomere mit dem Prepolymer und die maximale Temperatur am Ausgang der Verfahrensstufe vor. An dieser Stelle kann beispielsweise eine Kühlung vorgesehen sein. Bevorzugt kann die Temperaturdifferenz zwischen diesen Punkten maximal 20 K, besonders bevorzugt kleiner als 10 K betragen.

In einer weiteren bevorzugten Ausführungsform des erfindungsgemäßen Verfahrens weist die im Verfahrensschritt f) zugegebene Teilmenge der Komponente (A) und gegebenenfalls Teilmenge der Komponente (B) und / oder Teilmenge der Komponente (C) eine Temperatur von größer oder gleich 10 °C und kleiner oder gleich 150 °C auf. Diese Temperatur ist für die Einmischung im Extrusionsschritt besonders dienlich, da die hinzugegebene Teilmenge der Komponente (A) und gegebenenfalls Teilmenge der Komponente (B) den Prepolymerstrom kühlt und dadurch die maximale Temperatur, die bei dem Prozess auftritt, beschränkt. Des Weiteren kann die Temperatur bevorzugt zwischen größer oder gleich 20 °C und kleiner oder gleich 60 °C betragen.

In einer weiteren bevorzugten Ausführungsform des erfindungsgemäßen Verfahrens bestehen die Prepolymere des Ausgangsstroms aus Schritt e) im Wesentlichen aus Hydroxy-terminierten Prepolymeren. "Im Wesentlichen" bedeutet in diesem Zusammenhang, dass mindestens 95 Mol-%, vorzugsweise mindestens 98 Mol-%, besonders bevorzugt mindestens 99 Mol-% und noch bevorzugter mindestens 99,5 Mol-%, noch mehr bevorzugter mindestens 99,8 Mol-% und am Bevorzugtesten 100 Mol-% der Prepolymere des Ausgangsstroms aus Schritt e) Hydroxy-terminierte Prepolymere sind. In einer bevorzugten Ausführungsform weisen die Hydroxy-terminierten Prepolymere eine aus den Funktionalitäten der Edukte berechnete mittlere OH-Funktionalität von 1,8 bis 2,1, bevorzugt 1,95 bis 2,05, besonders bevorzugt 1,97 bis 2,0, ganz besonders bevorzugt 1,975 bis 2,0 auf.

In einer weiteren bevorzugten Ausführungsform des erfindungsgemäßen Verfahrens werden mindestens die Verfahrensschritte b), c), d) und e) in einem Kreislaufreaktor durchgeführt.

In einer weiteren bevorzugten Ausführungsform des erfindungsgemäßen Verfahrens verfügt der Kreislaufreaktor über eine Druckregelung, wobei der Druck im Bereich im Bereich von 2 bar absolut bis 11 bar absolut eingestellt wird. "Bar absolut" im Sinne der Erfindung bedeutet den Druck gegenüber dem Druck Null im leeren Raum (Vakuum). Der Überdruck hat den Vorteil, dass gasförmige Nebenkomponenten wie beispielsweise Restluft, Stickstoff oder Kohlendioxid, die mit den Komponenten (A), (B) und gegebenenfalls (C) mit in den Reaktor mit eingetragen werden, und niedrig flüchtige Komponenten, die bei der Reaktion entstehen können, wie beispielsweise Tetrahydrofuran durch Zyklisierung von Butandiol, in der flüssigen Phase gehalten werden, so dass das Volumen der im Kreislaufreaktor befindlichen Masse nicht durch Expansion oder Kontraktion von Gasblasen im Reaktor schwankt und dadurch der Masseaustrag ungleichmäßig wird.

Die Bestimmung bzw. Berechnung der Viskosität erfolgt bevorzugt im Prozess, beispielweise anhand der Messung von Druckverlusten in Rohrleitungsstücken oder in Statikmischern. Für kreisförmige Rohrleitungsstücke kann für laminare Strömung die Hagen-Poiseuille - Gleichung zur Berechnung von Druckverlusten ($\Delta p$ in Pascal) in der Form

$$\Delta p = \frac{128}{\pi}\frac{\dot{V}}{D^3}\eta\frac{L}{D}$$

($\dot{V}$ Volumenstrom in Kubikmeter pro Sekunde, *D* Innendurchmesser des durchströmten Rohres in Metern, $\pi \approx 3{,}14159$ ... Kreiszahl, *L* Länge des Rohres in Metern, $\eta$ Viskosität in Pascal mal Sekunden) umgestellt werden zu der Bestimmungsgleichung für die Viskosität

$$\eta = \frac{\pi}{128}\frac{D^4}{\dot{V}\,L}\;\Delta p$$

In einer weiteren bevorzugten Ausführungsform des erfindungsgemäßen Verfahrens liegt die Viskosität des Stoffstroms in dem Kreislaufreaktor unterhalb von 10 Pa·s, bevorzugt unterhalb von 3 Pa·s, besonders bevorzugt unterhalb von 1 Pa·s bei einer Messtemperatur von 190 °C und einer Frequenz von 10 Hz bestimmt gemäß ISO 6721-10:2015.

In einer weiteren bevorzugten Ausführungsform des erfindungsgemäßen Verfahrens weist der Kreislaufreaktor mindestens einen Wärmeübertrager auf mit einem Wärmeübertragungsvermögen, bezogen auf das gesamte Volumen des Kreislaufreaktors, von mehr als 10 kW/($m^3$·K), bevorzugt von mehr als 15 kW/($m^3$·K) und ganz besonders bevorzugt von mehr als 20 kW/($m^3$·K).

In einer weiteren bevorzugten Ausführungsform des erfindungsgemäßen Verfahrens weist der Kreislaufreaktor mindestens einen Wärmeübertrager auf und das Verhältnis von Wärmeübertrageroberfläche zu Kreislaufreaktoroberfläche beträgt > 0,3, vorzugsweise > 0,5 und bevorzugter > 0,65.

In einer weiteren bevorzugten Ausführungsform des erfindungsgemäßen Verfahrens weist die Wärmeübertrageroberfläche im Reaktor einen durchschnittlichen k-Wert von > 50 W/($m^2$·K), vorzugsweise > 100 W/($m^2$·K) und bevorzugter > 250 W/($m^2$·K) auf.

Die Erfindung betrifft weiterhin thermoplastisches Polyurethan erhältlich oder erhalten durch das erfindungsgemäße Verfahren. In einer bevorzugten Ausführungsform werden erfindungsgemäße thermoplastische Polyurethane durch Umsetzung von im Wesentlichen 1,6-Diisocyanatohexan mit 1,4- Butandiol erhalten. "Im Wesentlichen" bedeutet in diesem Zusammenhang, dass mindestens 95 Mol-%, vorzugsweise mindestens 98 Mol-%, besonders bevorzugt mindestens 99 Mol-% und noch bevorzugter mindestens 99,5 Mol-%, noch mehr bevorzugter mindestens 99,8 Mol-% und am Bevorzugtesten 100 Mol-% des erfindungsgemäßen thermoplastischen Polyurethans aus den Monomeren 1,6-Diisocyanatohexan und 1,4- Butandiol aufgebaut ist.

In einer weiteren Ausführungsform der Erfindung ist das erfindungsgemäße thermoplastische Polyurethan katalysatorfrei. Dies ist überraschend, da üblicherweise zum Erhalt eines homogenen Polyurethanpolymers Katalysatoren eingesetzt werden. Das erfindungsgemäße thermoplastische Polyurethan ist katalysatorfrei, wenn die Menge an Katalysator kleiner als 1,0 Gew.-%, bevorzugt kleiner als 0,5 Gew.-%, noch bevorzugter kleiner als 0,1 Gew.-% beträgt.

Die Erfindung betrifft weiterhin eine Zusammensetzung enthaltend mindestens das erfindungsgemäße thermoplastische Polyurethan und mindestens ein Additiv.

Bei dem Additiv kann es sich beispielsweise um im Bereich der Thermoplasttechnologie gängige Additive wie Farbstoffe, Füllstoffe, Verarbeitungshilfsmittel, Weichmacher, Nucleierungsmittel, Stabilisatoren, Flammschutzmittel, Entformungsmittel oder verstärkende Additive handeln. Nähere Angaben über die genannten Additive sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Additive mehrerer Typen zu verwenden.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung einzuschränken. Es zeigen die:

Fig. 1 einen möglichen Aufbau zur kontinuierlichen Herstellung der erfindungsgemäßen Polyurethane; und

Fig. 2 ein Schaubild zur Definition des Verfahrens und der Verfahrensschritte sowie der Stoffströme des erfindungsgemäßen Verfahrens.

Die Figur 1 zeigt einen möglichen Aufbau zur kontinuierlichen Herstellung von Hydroxy-terminierten Prepolymeren. Aus der HDI-Vorlage 1 wird mittels einer Pumpe 2 der HDI-Strom (Strom A) entnommen. Die entnommene Menge kann über einen Massedurchflussmesser 3 gemessen und gegebenenfalls über Rückwirkung auf die Pumpe 2 geregelt werden. werden. Ein ähnlicher Aufbau ergibt sich für die BDO-Vorlage 4 mit BDO-Pumpe 5 und Durchflussmesser 6 (Strom B). Beide Ströme A und B werden in den Statikmischer 7 gefördert und miteinander zum Strom C vermischt. Strom C wird in mit einem umlaufenden Oligomerstrom D in den temperierbaren Mischern 8, 9 zum Strom E gemischt wobei der Strom E in den Mischern 8, 9 und in den Rohrleitungen, reagiert. Der Strom E wird an der Verzweigung 11 in zwei Teilströme (Strom G, F) aufgeteilt. Hinter dem Druckhalteventil 12 wird der Strom G an einem Dreiwegeventil 13 vorbeigeführt. Es kann sinnvoll sein, dass bei An- und Abfahren der Anlage oder bei Störungen anfallende Material auf einen Abfallbehälter 14 zu fahren. Im regulären Betrieb wird der Strom G auf einen Extruder 18 geleitet. Ein HDI-Strom J wird dem Behälter 1 entnommen und über eine Pumpe 15 und einen Massedurchflussmesser 16, mit dem der HDI-Strom J gemessen und gegebenenfalls geregelt wird, dem Extruder 18 zugeführt, in dem er mit dem Strom G gemischt und das Gemisch zur Reaktion gebracht wird. Der Extruder 18 kann am Ein- und Ausgang Vorrichtungen 17, 19 zur Entgasung des geschmolzenen Polymers aufweisen. Der extrudierte Polymerstrom K kann durch Düsen ausgepresst, in einem mit VE-Wasser gefüllten Wasserbad 20 abgekühlt und durch einen Granulator 21 zu Granulat zerschnitten werden.

Die Figur 2 zeigt schematisch die Abfolge und die Stoffströme des erfindungsgemäßen Verfahrens. Strom A und B sind die Eduktströme der Komponenten (A) und (B), wobei ein Teil der insgesamt eingesetzten Menge der Komponente (A) über Strom A zugegeben wird. Die Komponente (B) wird nur über den Strom B dem Verfahren zugeführt. Die Ströme A und B werden gemischt (1) (Strom C), Strom C wird dann mit dem Strom D gemischt, wobei Strom D durch Rückführung des Stroms F entsteht. Die Mischung der Ströme C und D ist Strom E. Dieser wird aufgeteilt, wobei einer der Teilströme (Strom F) zurückgeführt, d.h. im Kreis gefahren, wird. Der andere Teilstrom (Strom G) wird mit dem anderen Teilstrom der Komponente (A) (Strom J) gemischt und das Gemisch wird zur Reaktion gebracht, extrudiert, gekühlt und geschnitten.

## Beispiele

Alle Prozentangaben beziehen sich, soweit nichts Anderslautendes vermerkt, auf das Gewicht.

Die zur Zeit der Versuchsdurchführung herrschende Umgebungstemperatur von 25 °C wird als RT (Raumtemperatur) bezeichnet.

### I. Verwendete Rohstoffe

1,6-Hexamethylendiisocyanat (HDI, Reinheit ≥ 99 Gew.-%) wurde von der Covestro Deutschland AG bezogen.

1,4-Butandiol (BDO, Reinheit ≥ 99 Gew.-%) wurde von Ashland Industries Deutschland GmbH bezogen.

Beispiel 1

Aus einer 250 - Liter - Vorlage für HDI 1 wurde mit Hilfe einer Zahnringpumpe 2 (Firma HNP, MZR 7255) HDI ein HDI-Strom A zu einem Statikmischer 7 gefördert. Der Durchsatz des HDI-Stroms A wurde mittels eines Massedurchflussmessers 3 (Firma Bronkhorst, Mini Cori-Flow M1X, max. Durchfluss 12 kg/h) gemessen und auf einen Wert von 2,911 kg/h eingeregelt. Aus einer 250 - Liter - Vorlage für BDO 4 wurde mit Hilfe einer Zahnringpumpe 5 (Firma HNP, MZR 7205) ein BDO-Strom B zum Statikmischer 7 gefördert. Der Durchsatz des BDO-Stroms wurde mittels eines Massedurchflussmessers 6 (Firma Bronkhorst, Mini Cori-Flow M1X, max. Durchfluss 8 kg/h) gemessen und auf einen Wert von 2,000 kg/h eingeregelt. Die Temperatur des HDIs betrug dabei Umgebungstemperatur, ca. 25 °C. Die Temperatur des BDO betrug 40 °C. In dem Statikmischer 7 (Sulzer SMX, Durchmesser 6 mm, Verhältnis von Länge zu Durchmesser L/D = 10) wurden der HDI-Strom A und der BDO-Strom B miteinander gemischt. Dies ist der Strom C.

Der gemischte und dispergierte Strom C wird in einem Umlauf mit einem umlaufenden Polymerstrom D in einem von außen temperierten Statikmischer 8 (Statikmischer äquivalent zu Sulzer SMX, Innendurchmesser 34 mm, L/D=20) zu einem Strom H gemischt. In diesem Statikmischer wurde auch schon Wärme übertragen, die Wärmeübertrageroberfläche betrug 0,05 Quadratmeter. Die Temperatur des Stromes D betrug 182 °C.

Der gemischte und teilweise schon reagierte Strom H wurde in einen temperierbaren statischen Mischer 9 geführt. Dort lief die Reaktion zum großen Teil ab, und die entstehende Reaktionswärme wird abgeführt. Der temperierbare statische Mischer 9 war ähnlich aufgebaut wie ein Sulzer SMR-Reaktor mit innenliegenden, gekreuzten Rohren. Er hatte ein Innenvolumen von 2,2 Litern und eine Wärmeaustauschfläche von 0,31 Quadratmeter. Sein Wärmeaustauschvermögen, bezogen auf die Produktseite, betrug unter den Betriebsbedingungen 78 Watt pro Kelvin. Bezogen auf das gesamte Volumen des Kreislaufreaktors von 4 Liter, betrug der Wärmeübergangskoeffizient 19 Kilowatt pro Kubikmeter und Kelvin. Er war mit Wärmeträgeröl beheizt/gekühlt. Die Heizmitteltemperatur am Eintritt betrug 180 °C.

Das Verhältnis der Wärmeübertragungsfläche zur Gesamtfläche betrug damit (0,31+0,05)/(0,31+0,05+0,18) = 0,655.

Der Wärmeübergangskoeffizient im temperierbaren statischen Mischer betrug 270 Watt pro Quadratmeter und Kelvin.

Aus dem temperierbaren statischen Mischer 9 trat der Produktstrom als weitgehend ausreagierter Strom E mit einer Temperatur von 183 °C aus. Der Strom E wurde an einer Verzweigung 11 in zwei Teilströme F und G aufgespalten. Der Druck des Teilstrom F wurde an einer Zahnradpumpe 10 erhöht. Der Teilstrom F wurde nach der Pumpe zum oben erwähnten Teilstrom D.

Die Zahnradpumpe 10 (Firma Witte Chem 25,6-3), hatte ein Volumen pro Umdrehung von 25,6 Kubikzentimeter und eine Drehzahl von 50 pro Minute. Der umgepumpte Strom G betrug damit 75 kg/h.

Die ganze Umlauf war voll gefüllt, und das Polymer zum großen Teil inkompressibel. Daher war der Massenstrom des Stroms G identisch mit dem des Stroms C. Der Strom G bestand aus Oligomer.

Der ganze Umlauf bestand aus doppelwandig ausgeführten Rohrleitungen und Apparaten, die mit Thermoöl beheizt waren. Die Heizmitteltemperatur betrug 182 °C.

Der Massenstrom G wurde anschließend über ein Druckhalteventil 12 geführt. Der Druck in dem Druckhalteventil 12 wurde über den Verlauf des Versuches so geregelt, dass im Umlauf ein Druck zwischen 4 und 7 bar abs herrschte. Dadurch lag im gesamten Umlauf einphasige Strömung vor, ohne dass die Druckfestigkeit aller Apparate überschritten wurde.

Nach dem Druckhalteventil 12 wurde der Strom G an einem Dreiwegeventil 13 vorbeigeführt. Dort konnte es bei An- und Abfahren oder bei Störungen auf einen Abfallbehälter 14, ein offenes 60-Liter-Metallfass mit Absaugung, gefahren werden. Im regulären Betrieb wurde der Strom G auf einen Extruder 18 geleitet. Von dem Strom am Abfallbehälter 14 wurde im stationären Zustand eine Probe genommen, die Viskosität betrug 0,81 Pa·s bei 190 °C und einer Frequenz von 10 Hz.

Aus der HDI-Vorlage 1 wurde mit Hilfe einer Mikrozahnringpumpe 15 (MZR 6355 der Firma HNP) ein HDI-Strom J entnommen. Der Durchsatz des HDI-Stroms J wurde mittels eines Massedurchflussmessers 16 (Firma Bronkhorst, Mini Cori-Flow, M1X, max. Durchfluss 2 kg/h) gemessen und auf 0,784 Kilogramm pro Stunde eingeregelt. Die Temperatur des HDI-Stroms J betrug ebenfalls Raumtemperatur, etwa 25 °C. Dieser Strom wurde ebenfalls auf den Extruder 18 geleitet.Der Extruder 18 war ein ZSK 26 MC der Firma Coperion, der bei einer Drehzahl von 66 Umdrehungen pro Minute betrieben wurden. Auf diesem Extruder wurde der Strom G über eine Entlüftung 17, die bei ca. 1 mbar Unterdruck gegenüber dem Umgebungsdruck betrieben wurde, von eventuell mit den Stoffströmen A und B eingeschleppten Inertgasen und möglichen flüchtigen Reaktionsprodukten befreit. Stromab von der Zugabe des Oligomerstroms G wurde der HDI-Strom J zugegeben und die Reaktion zum Polymer durchgeführt. Vor Ende des Extruders wurde der entstehende Polymerstrom über eine Entgasung 19 noch von flüchtigen Bestandteilen befreit. Der Druck in dieser Entgasung betrug 200 mbar unter Umgebungsdruck. Die Gehäusetemperaturen des Extruders wurden auf zwischen 190 °C und 210 °C eingestellt. Der Polymerstrom K wurde durch zwei Düsen ausgepresst, in einem mit Vollentsalztes-Wasser gefüllten Wasserbad abgekühlt und durch einen Granulator 21 zu Granulat zerschnitten. Bei einer Messung der Temperatur des Polymerstroms K wurde eine Temperatur von 208 °C festgestellt.

Beispiel 2

Aus einer 250 - Liter - Vorlage für HDI 1 wurde mit Hilfe einer Zahnringpumpe 2 (Firma HNP, MZR 7255) HDI ein HDI-Strom A zu einem Statikmischer 7 gefördert. Der Durchsatz des HDI-Stroms A wurde mittels eines Massedurchflussmessers 3 (Firma Bronkhorst, Mini Cori-Flow M1X, max. Durchfluss 12 kg/h) gemessen und auf einen Wert von 4,760 kg/h eingeregelt. Aus einer 250 - Liter - Vorlage für BDO 4 wurde mit Hilfe einer Zahnringpumpe 5 (Firma HNP, MZR 7205) ein BDO-Strom B zum Statikmischer 7 gefördert. Der Durchsatz des BDO-Stroms wurde mittels eines Massedurchflussmessers 6 (Firma Bronkhorst, Mini Cori-Flow M1X, max. Durchfluss 8 kg/h) gemessen und auf einen Wert von 3,000 kg/h eingeregelt. Die Temperatur des HDIs betrug dabei Umgebungstemperatur, ca. 25 °C. Die Temperatur des BDO betrug 40 °C. In dem Statikmischer 7 (Sulzer SMX, Durchmesser 6 mm, Verhältnis von Länge zu Durchmesser L/D = 10) wurden der HDI-Strom A und der BDO-Strom B miteinander gemischt. Dies ist der Strom C.

Der gemischte und dispergierte Strom C wird in einem Umlauf mit einem umlaufenden Polymerstrom D in einem von außen temperierten Statikmischer 8 (Statikmischer äquivalent zu Sulzer SMX, Innendurchmesser 34 mm, L/D=20) zu einem Strom H gemischt. In diesem Statikmischer wurde auch schon Wärme übertragen, die Wärmeübertrageroberfläche betrug 0,05 Quadratmeter. Die Temperatur des Stromes D betrug 185 °C.

Der gemischte und teilweise schon reagierte Strom H wurde in einen temperierbaren statischen Mischer 9 geführt. Dort lief die Reaktion zum großen Teil ab, und die entstehende Reaktionswärme wird abgeführt. Der temperierbare statische Mischer 9 war ähnlich aufgebaut wie ein Sulzer SMR-Reaktor mit innenliegenden, gekreuzten Rohren. Er hatte ein Innenvolumen von 2,2 Litern und eine Wärmeaustauschfläche von 0,31 Quadratmeter. Sein Wärmeaustauschvermögen, bezogen auf die Produktseite, betrug unter den Betriebsbedingungen 87 Watt pro Kelvin. Bezogen auf das gesamte Volumen des Kreislaufreaktors von 4 Liter, betrug der Wärmeübergangskoeffizient 22 Kilowatt pro Kubikmeter und Kelvin. Er war mit Wärmeträgeröl beheizt/gekühlt. Die Heizmitteltemperatur am Eintritt betrug 185 °C. Die gesamte Fläche der Rohrleitungen betrug 0,18 Quadratmeter.

Das Verhältnis der Wärmeübertragungsfläche zur Gesamtfläche betrug damit (0,31+0,05)/(0,31+0,05+0,18) = 0,655.

Der Wärmeübergangskoeffizient im temperierbaren statischen Mischer betrug 270 Watt pro Quadratmeter und Kelvin.

Aus dem temperierbaren statischen Mischer 9 trat der Produktstrom als weitgehend ausreagierter Strom E mit einer Temperatur von 185 °C aus. Der Strom E wurde an einer Verzweigung 11 in zwei Teilströme F und G aufgespalten. Der Druck des Teilstrom F wurde an einer Zahnradpumpe 10 erhöht. Der Teilstrom F wurde nach der Pumpe zum oben erwähnten Teilstrom D.

Die Zahnradpumpe 10 (Firma Witte Chem 25,6-3), hatte ein Volumen pro Umdrehung von 25,6 Kubikzentimeter und eine Drehzahl von 75 pro Minute. Der umgepumpte Strom G betrug damit 112,5 kg/h.

Die ganze Umlauf war voll gefüllt, und das Polymer zum großen Teil inkompressibel. Daher war der Massenstrom des Stroms G identisch mit dem des Stroms C. Der Strom G bestand aus Oligomer.

Der ganze Umlauf bestand aus doppelwandig ausgeführten Rohrleitungen und Apparaten, die mit Thermoöl beheizt waren. Die Heizmitteltemperatur betrug 185 °C.

Der Massenstrom G wurde anschließend über ein Druckhalteventil 12 geführt. Der Druck in dem Druckhalteventil 12 wurde über den Verlauf des Versuches so geregelt, dass im Umlauf ein Druck zwischen 4 und 7 bar abs herrschte. Dadurch lag im gesamten Umlauf einphasige Strömung vor, ohne dass die Druckfestigkeit aller Apparate überschritten wurde.

Nach dem Druckhalteventil 12 wurde der Strom G an einem Dreiwegeventil 13 vorbeigeführt. Dort konnte es bei An- und Abfahren oder bei Störungen auf einen Abfallbehälter 14, ein offenes 60-Liter-Metallfass mit Absaugung, gefahren werden. Im regulären Betrieb wurde der Strom G auf einen Extruder 18 geleitet. Von dem Strom am Abfallbehälter 14 wurde im stationären Zustand eine Probe genommen, die Viskosität betrug 7 Pa·s bei 190 °C und einer Frequenz von 10 Hz.

Aus der HDI-Vorlage 1 wurde mit Hilfe einer Mikrozahnringpumpe 15 (MZR 6355 der Firma HNP) ein HDI-Strom J entnommen. Der Durchsatz des HDI-Stroms J wurde mittels eines Massedurchflussmessers 16 (Firma Bronkhorst, Mini Cori-Flow, M1X, max. Durchfluss 2 kg/h) gemessen und auf 0,784 Kilogramm pro Stunde eingeregelt. Die Temperatur des HDI-Stroms J betrug ebenfalls Raumtemperatur, etwa 25 °C. Dieser Strom wurde ebenfalls auf den Extruder 18 geleitet.

Der Extruder 18 war ein ZSK 26 MC der Firma Coperion, der bei einer Drehzahl von 180 Umdrehungen pro Minute betrieben wurden. Auf diesem Extruder wurde der Strom G über eine Entlüftung 17, die bei ca. 1 mbar Unterdruck gegenüber dem Umgebungsdruck betrieben wurde, von eventuell mit den Stoffströmen A und B eingeschleppten Inertgasen und möglichen flüchtigen Reaktionsprodukten befreit. Stromab von der Zugabe des Oligomerstroms G wurde der HDI-Strom J zugegeben und die Reaktion zum Polymer durchgeführt. Vor Ende des Extruders wurde der entstehende Polymerstrom über eine Entgasung 19 noch von flüchtigen Bestandteilen befreit. Der Druck in dieser Entgasung betrug 600 mbar unter Umgebungsdruck. Die Gehäusetemperaturen des Extruders wurden auf zwischen 190 °C und 210 °C eingestellt. Der Polymerstrom K wurde durch zwei Düsen ausgepresst, in einem mit Vollentsalztes-Wasser gefüllten Wasserbad abgekühlt und durch einen Granulator 21 zu Granulat zerschnitten. Bei einer Messung der Temperatur des Polymerstroms K wurde eine Temperatur von 208 °C festgestellt.

Beispiel 3

Aus einer 250 - Liter - Vorlage für HDI 1 wurde mit Hilfe einer Zahnringpumpe 2 (Firma HNP, MZR 7255) HDI ein HDI-Strom A zu einem Statikmischer 7 gefördert. Der Durchsatz des HDI-Stroms A wurde mittels eines Massedurchflussmessers 3 (Firma Bronkhorst, Mini Cori-Flow M1X, max. Durchfluss 12 kg/h) gemessen und auf einen Wert von 4,591 kg/h eingeregelt. Aus einer 250 - Liter - Vorlage für BDO 4 wurde mit Hilfe einer Zahnringpumpe 5 (Firma HNP, MZR 7205) ein BDO-Strom B zum Statikmischer 7 gefördert. Der Durchsatz des BDO-Stroms wurde mittels eines Massedurchflussmessers 6 (Firma Bronkhorst, Mini Cori-Flow M1X, max. Durchfluss 8 kg/h) gemessen und auf einen Wert von 3,000 kg/h eingeregelt. Die Temperatur des HDIs betrug dabei Umgebungstemperatur, ca. 25 °C. Die Temperatur des BDO betrug 40 °C. In dem Statikmischer 7 (Sulzer SMX, Durchmesser 6 mm, Verhältnis von Länge zu Durchmesser L/D = 10) wurden der HDI-Strom A und der BDO-Strom B miteinander gemischt. Dies ist der Strom C.

Der gemischte und dispergierte Strom C wird in einem Umlauf mit einem umlaufenden Polymerstrom D in einem von außen temperierten Statikmischer 8 (Statikmischer äquivalent zu Sulzer SMX, Innendurchmesser 34 mm, L/D=20) zu einem Strom H gemischt. In diesem Statikmischer wurde auch schon Wärme übertragen, die Wärmeübertrageroberfläche betrug 0,05 Quadratmeter. Die Temperatur des Stromes D betrug 182 °C.

Der gemischte und teilweise schon reagierte Strom H wurde in einen temperierbaren statischen Mischer 9 geführt. Dort lief die Reaktion zum großen Teil ab, und die entstehende Reaktionswärme wird abgeführt. Der temperierbare statische Mischer 9 war ähnlich aufgebaut wie ein Sulzer SMR-Reaktor mit innenliegenden, gekreuzten Rohren. Er hatte ein Innenvolumen von 2,2 Litern und eine Wärmeaustauschfläche von 0,31 Quadratmeter. Sein Wärmeaustauschvermögen, bezogen auf die Produktseite, betrug unter den Betriebsbedingungen 87 Watt pro Kelvin. Bezogen auf das gesamte Volumen des Kreislaufreaktors von 4 Liter, betrug der Wärmeübergangskoeffizient 22 Kilowatt pro Kubikmeter und Kelvin. Er war mit Wärmeträgeröl beheizt/gekühlt. Die Heizmitteltemperatur am Eintritt betrug 180 °C.

Das Verhältnis der Wärmeübertragungsfläche zur Gesamtfläche betrug damit (0,31+0,05)/(0,31+0,05+0,18) = 0,655.

Der Wärmeübergangskoeffizient im temperierbaren statischen Mischer betrug 270 Watt pro Quadratmeter und Kelvin.

Aus dem temperierbaren statischen Mischer 9 trat der Produktstrom als weitgehend ausreagierter Strom E mit einer Temperatur von 183 °C aus. Der Strom E wurde an einer Verzweigung 11 in zwei Teilströme F und G aufgespalten. Der Druck des Teilstrom F wurde an einer Zahnradpumpe 10 erhöht. Der Teilstrom F wurde nach der Pumpe zum oben erwähnten Teilstrom D.

Die Zahnradpumpe 10 (Firma Witte Chem 25,6-3), hatte ein Volumen pro Umdrehung von 25,6 Kubikzentimeter und eine Drehzahl von 50 pro Minute. Der umgepumpte Strom G betrug damit 75 kg/h.

Die ganze Umlauf war voll gefüllt, und das Polymer zum großen Teil inkompressibel. Daher war der Massenstrom des Stroms G identisch mit dem des Stroms C. Der Strom G bestand aus Oligomer.

Der ganze Umlauf bestand aus doppelwandig ausgeführten Rohrleitungen und Apparaten, die mit Thermoöl beheizt waren. Die Heizmitteltemperatur betrug 182 °C.

Der Massenstrom G wurde anschließend über ein Druckhalteventil 12 geführt. Der Druck in dem Druckhalteventil 12 wurde über den Verlauf des Versuches so geregelt, dass im Umlauf ein Druck zwischen 4 und 9 bar abs herrschte. Dadurch lag im gesamten Umlauf einphasige Strömung vor, ohne dass die Druckfestigkeit aller Apparate überschritten wurde.

Nach dem Druckhalteventil 12 wurde der Strom G an einem Dreiwegeventil 13 vorbeigeführt. Dort konnte es bei An- und Abfahren oder bei Störungen auf einen Abfallbehälter 14, ein offenes 60-Liter-Metallfass mit Absaugung, gefahren werden. Im regulären Betrieb wurde der Strom G auf einen Extruder 18 geleitet. Von dem Strom am Abfallbehälter 14 wurde im stationären Zustand eine Probe genommen, die Viskosität betrug 2,3 Pa·s bei 190 °C und einer Frequenz von 10 Hz.

Aus der HDI-Vorlage 1 wurde mit Hilfe einer Mikrozahnringpumpe 15 (MZR 6355 der Firma HNP) ein HDI-Strom J entnommen. Der Durchsatz des HDI-Stroms J wurde mittels eines Massedurchflussmessers 16 (Firma Bronkhorst, Mini Cori-Flow, M1X, max. Durchfluss 2 kg/h) gemessen und auf 0,952 Kilogramm pro Stunde eingeregelt. Die Temperatur des HDI-Stroms J betrug ebenfalls Raumtemperatur, etwa 25 °C. Dieser Strom wurde ebenfalls auf den Extruder 18 geleitet.

Der Extruder 18 war ein ZSK 26 MC der Firma Coperion, der bei einer Drehzahl von 66 Umdrehungen pro Minute betrieben wurden. Auf diesem Extruder wurde der Strom G über eine Entlüftung 17, die bei ca. 1 mbar Unterdruck gegenüber dem Umgebungsdruck betrieben wurde, von eventuell mit den Stoffströmen A und B eingeschleppten Inertgasen und möglichen flüchtigen Reaktionsprodukten befreit. Stromab von der Zugabe des Oligomerstroms G wurde der HDI-Strom J zugegeben und die Reaktion zum Polymer durchgeführt. Vor Ende des Extruders wurde der entstehende Polymerstrom über eine Entgasung 19 noch von flüchtigen Bestandteilen befreit. Der Druck in dieser Entgasung betrug 200 mbar unter Umgebungsdruck. Die Gehäusetemperaturen des Extruders wurden auf zwischen 190 °C und 260 °C eingestellt. Der Polymerstrom K wurde durch zwei Düsen ausgepresst, in einem mit Vollentsalztes-Wasser gefüllten Wasserbad abgekühlt und durch einen Granulator 21 zu Granulat zerschnitten. Bei einer Messung der Temperatur des Polymerstroms K wurde eine Temperatur von 248 °C festgestellt.

## Patentansprüche

1. Verfahren zur kontinuierlichen Herstellung thermoplastischen Polyurethans durch Umsetzung der Komponenten

    (A) einem oder mehreren cycloaliphatischen, aliphatischen und/oder araliphatischen Polyisocyanaten,

    (B) einem oder mehreren cycloaliphatischen, aliphatischen und/oder araliphatischen Polyolen, wobei die Gesamtmenge der Komponente (B) eine Hydroxylzahl von 600 mg KOH/g bis 1830 mg KOH/g bestimmt gemäß DIN EN ISO 4629-2:2016 aufweist,

    (C) gegebenenfalls in Gegenwart von einem oder mehreren Katalysatoren, und/oder einem oder mehreren Zusatzstoffen, **dadurch gekennzeichnet, dass** das Verfahren die Schritte umfasst:

a) Herstellen einer Mischung aus einer Teilmenge der Komponente (A), einer Teilmenge oder der Gesamtmenge der Komponente (B) und gegebenenfalls einer Teilmenge oder der Gesamtmenge der Komponente (C), wobei in Verfahrensschritt a) ein molares Verhältnis von Komponente (A) zu Komponente (B) von im Bereich von 0,6 : 1,0 bis 0,95 : 1,0 vorliegt;

b) Vermischen der im Verfahrensschritt a) hergestellten Mischung mit einem aus Verfahrensschritt e) erhaltenen Prepolymer-Ausgangsteilstrom;

c) Zur Reaktion bringen der Mischung aus Verfahrensschritt b);

d) Aufteilen der in Schritt c) erhaltenen Reaktionsmischung in zwei Ausgangsteilströme;

e) Rückführen eines Ausgangsteilstromes aus Verfahrensschritt d) als Eingangsteilstrom für die Mischung im Verfahrensschritt b);

f) Vermischen der Restmenge der Komponente (A) und gegebenenfalls der Restmenge der Komponenten (B) und (C) mit dem verbleibenden Ausgangsteilstrom des Verfahrensschrittes d); und

g) Ausreagieren der in Verfahrensschritt f) erhaltenen Mischung zum Erhalt eines thermoplastischen Polyurethans.

**2.** Verfahren gemäß Anspruch 1, **dadurch gekennzeichnet, dass** als Komponente (A) ein oder mehrere aliphatische und / oder cycloaliphatische, monomere Diisocyanate mit einem Molekulargewicht im Bereich von $\geq$ 140 g/mol bis $\leq$ 400 g/mol eingesetzt werden.

**3.** Verfahren gemäß einem der vorhergehenden Ansprüche, **dadurch gekennzeichnet, dass** als Komponente (A) ein oder mehrere monomere Diisocyanate eingesetzt werden ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI) und/oder Mischungen aus mindestens 2 hieraus, vorzugsweise ausgewählt aus der Gruppe bestehend aus 1,4-Diisocyanatobutan (BDI), 1,5-Diisocyanatopentan (PDI), 1,6-Diisocyanatohexan (HDI) und/oder Mischungen aus mindestens 2 hieraus und besonders bevorzugt ausgewählt aus der Gruppe bestehend aus 1,5-Diisocyanatopentan (PDI), 1,6-Diisocyanatohexan (HDI) und/oder Mischungen aus mindestens 2 hieraus.

**4.** Verfahren gemäß einem der vorhergehenden Ansprüche, **dadurch gekennzeichnet, dass** als Komponente (B) eine oder mehrere cycloaliphatische, aliphatische und/oder araliphatische Polyole mit einer Hydroxylzahl von 600 mg KOH/g bis 1830 mg KOH/g bestimmt gemäß DIN EN ISO 4629-2:2016 eingesetzt werden, vorzugsweise, dass als Komponente (B) ein oder mehrere cycloaliphatische und / oder aliphatische Diole, mit einer Hydroxylzahl von 600 mg KOH/g bis 1830 mg KOH/g bestimmt gemäß DIN EN ISO 4629-2:2016, eingesetzt werden.

**5.** Verfahren gemäß einem der vorhergehenden Ansprüche, **dadurch gekennzeichnet, dass** als Komponente (B) ein oder mehrere Diole eingesetzt werden ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, Diethylenglykol, und/oder Mischungen aus mindestens 2 hieraus, vorzugsweise ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, und/oder Mischungen aus mindestens 2 hieraus, besonders bevorzugt ausgewählt aus der Gruppe bestehend aus 1,2-Ethandiol, 1,2-Propandiol, 1,3-Propandiol, 1,2-Butandiol, 1,3-Butandiol, 1,4-Butandiol und/oder Mischungen aus mindestens 2 hieraus.

**6.** Verfahren gemäß einem der vorhergehenden Ansprüche, **dadurch gekennzeichnet, dass** in Verfahrensschritt a) die Gesamtmenge der Komponente (B) eingesetzt wird.

**7.** Verfahren gemäß einem der vorhergehenden Ansprüche, **dadurch gekennzeichnet, dass** die Komponenten (A) und (B) insgesamt über alle Verfahrensstufen in einem molaren Verhältnis im Bereich von 0,9 : 1,0 bis 1,2 : 1,0 eingesetzt werden.

**8.** Verfahren gemäß einem der vorhergehenden Ansprüche, **dadurch gekennzeichnet, dass** die Temperatur im Verfahrensschritt a) größer oder gleich 25 °C und kleiner oder gleich 60 °C beträgt.

**9.** Verfahren gemäß einem der vorhergehenden Ansprüche, **dadurch gekennzeichnet, dass** die Temperatur im Verfahrensschritt c) größer oder gleich 170 °C und kleiner oder gleich 190 °C beträgt.

**10.** Verfahren gemäß einem der vorhergehenden Ansprüche, **dadurch gekennzeichnet, dass** zumindest der Verfahrensschritt g) in einem Extruder durchgeführt wird, vorzugsweise die Verfahrensschritte f) und g) in einem Extruder durchgeführt werden.

**11.** Verfahren nach Anspruch 10, **dadurch gekennzeichnet, dass** die Temperaturen im Verfahrensschritt g) größer oder gleich 180 °C und kleiner oder gleich 260 °C betragen.

**12.** Verfahren gemäß einem der vorhergehenden Ansprüche, **dadurch gekennzeichnet, dass** das molare Verhältnis der im Verfahrensschritt a) und im Verfahrensschritt f) eingesetzten Teilmengen von Komponente (A), berechnet als Mol Komponente (A) in a) / [Mol Komponente (A) in f) plus Mol Komponente (A) in a)], größer oder gleich 0,9 und kleiner oder gleich 0,65 beträgt.

**13.** Verfahren gemäß einem der vorhergehenden Ansprüche, **dadurch gekennzeichnet, dass** das Gewichtsverhältnis des im Verfahrensschritt b) zurückgeführten Prepolymeren bezogen auf die Menge an eingesetzter Mischung aus Komponente (A) und Komponente (B) größer oder gleich 10 und kleiner oder gleich 30 beträgt.

**14.** Verfahren gemäß einem der vorhergehenden Ansprüche, **dadurch gekennzeichnet, dass** die im Verfahrensschritt f) zugegebene Teilmenge der Komponente (A) und gegebenenfalls Teilmenge der Komponente (B) und / oder Teilmenge der Komponente (C) eine Temperatur von größer oder gleich 10 °C und kleiner oder gleich 150 °C aufweist.

**15.** Verfahren gemäß einem der vorhergehenden Ansprüche, **dadurch gekennzeichnet, dass** die Prepolymere des Ausgangsstroms aus Schritt e) im Wesentlichen aus Hydroxy-terminierten Prepolymeren bestehen.

**16.** Verfahren gemäß einem der vorhergehenden Ansprüche, **dadurch gekennzeichnet, dass** mindestens die Verfahrensschritte b), c), d) und e) in einem Kreislaufreaktor durchgeführt werden.

**17.** Verfahren gemäß Anspruch 16, **dadurch gekennzeichnet, dass** der Kreislaufreaktor über eine Druckregelung verfügt und der Druck im Bereich von 2 bar absolut bis 11 bar absolut eingestellt wird.

**18.** Verfahren gemäß einem der Ansprüche 16 oder 17, **dadurch gekennzeichnet, dass** die Viskosität des Stoffstroms in dem Kreislaufreaktor unterhalb von 10 Pa·s, bevorzugt unterhalb von 3 Pa·s, besonders bevorzugt unterhalb von 1 Pa·s bei einer Messtemperatur von 190 °C und einer Frequenz von 10 Hz bestimmt gemäß ISO 6721-10:2015 liegt.

**19.** Verfahren gemäß einem der Ansprüche 16 bis 18, **dadurch gekennzeichnet, dass** der Kreislaufreaktor mindestens einen Wärmeübertrager aufweist mit einem Wärmeübertragungsvermögen, bezogen auf das gesamte Volumen des Kreislaufreaktors, von mehr als 10 kW/($m^3$·K), bevorzugt von mehr als 15 kW/($m^3$·K) und ganz besonders bevorzugt von mehr als 20 kW/($m^3$·K).

**20.** Verfahren gemäß einem der Ansprüche 16 bis 19, **dadurch gekennzeichnet, dass** der Kreislaufreaktor mindestens einen Wärmeübertrager aufweist und das Verhältnis von Wärmeübertrageroberfläche zu Kreislaufreaktoroberfläche > 0,3, vorzugsweise > 0,5 und bevorzugter > 0,65 beträgt.

**21.** Verfahren nach gemäß einem der Ansprüche 19 oder 20, **dadurch gekennzeichnet, dass** die Wärmeübertrageroberfläche im Reaktor einen durchschnittlichen k-Wert von > 50 W/($M^2$·K), vorzugsweise > 100 W/($M^2$·K) und bevorzugter > 250 W/($m^2$·K) aufweist.

**22.** Verfahren nach einem der vorhergehenden Ansprüche, **dadurch gekennzeichnet, dass** das thermoplastische Polyurethan im Wesentlichen durch Polyaddition von Kombinationen aus Komponente (A) und Komponente (B) gebildet wird ausgewählt aus der Gruppe bestehend aus 1,4-Diisocyanatobutan mit 1,2-Ethandiol, 1,4-Diisocyanatobutan mit 1,2- und/oder 1,3-Propandiol, 1,4-Diisocyanatobutan mit 1,2-, 1,3- und/oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und/oder 1,3-Propandiol, 1,5-Diisocyanatopentan mit 1,2-, 1,3- und/oder 1,4-Butandiol, 1,5-Diisocyanatopentan mit 1,5-Pentandiol, 1,5-Diisocyanatopentan mit 1,6-Hexandiol, 1,6-Diisocyanatohexan mit 1,2-Ethandiol, 1,6-Diisocyanatohexan mit 1,2- und/oder 1,3-Propandiol, 1,6-Diisocyanatohexan mit 1,2-, 1,3- und/oder 1,4-Butandiol, 1,6-Diisocyanatohexan mit 1,5-Pentandiol und 1,6-Diisocyanatohexan mit 1,6-Hexandiol, vorzugsweise ausgewählt werden aus der Gruppe bestehend aus 1,4-Diisocyanatobutan mit 1,2-Ethandiol, 1,4-Diisocyanatobutan mit 1,2- und/oder 1,3-Propandiol, 1,4-Diisocyanatobutan mit 1,2-, 1,3- und/oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und/oder 1,3-Propandiol, 1,5-Diisocyanatopentan mit 1,2-, 1,3- und/oder 1,4-Butandiol, 1,5-Diisocyanatopentan mit 1,5-Pentandiol, 1,6-Diisocyanatohexan mit 1,2-Ethandiol, 1,6-Diisocyanatohexan mit 1,2- und/oder 1,3-Propandiol und 1,6-Diisocyanatohexan mit 1,2-, 1,3- und/oder 1,4-Butandiol, besonders bevorzugt ausgewählt werden aus der Gruppe bestehend aus 1,5-Diisocyanatopentan mit 1,2- Butandiol, 1,3- Butandiol, 1,4-Butandiol und / oder Mischungen aus mindestens 2 hieraus und 1,6-Diisocyanatohexan mit 1,2- Butandiol, 1,3-Butandiol, 1,4-Butandiol und / oder Mischungen aus mindestens 2 hieraus.

**23.** Thermoplastisches Polyurethan erhältlich oder erhalten durch das Verfahren nach einem der Ansprüche 1-22.

# Figur 1

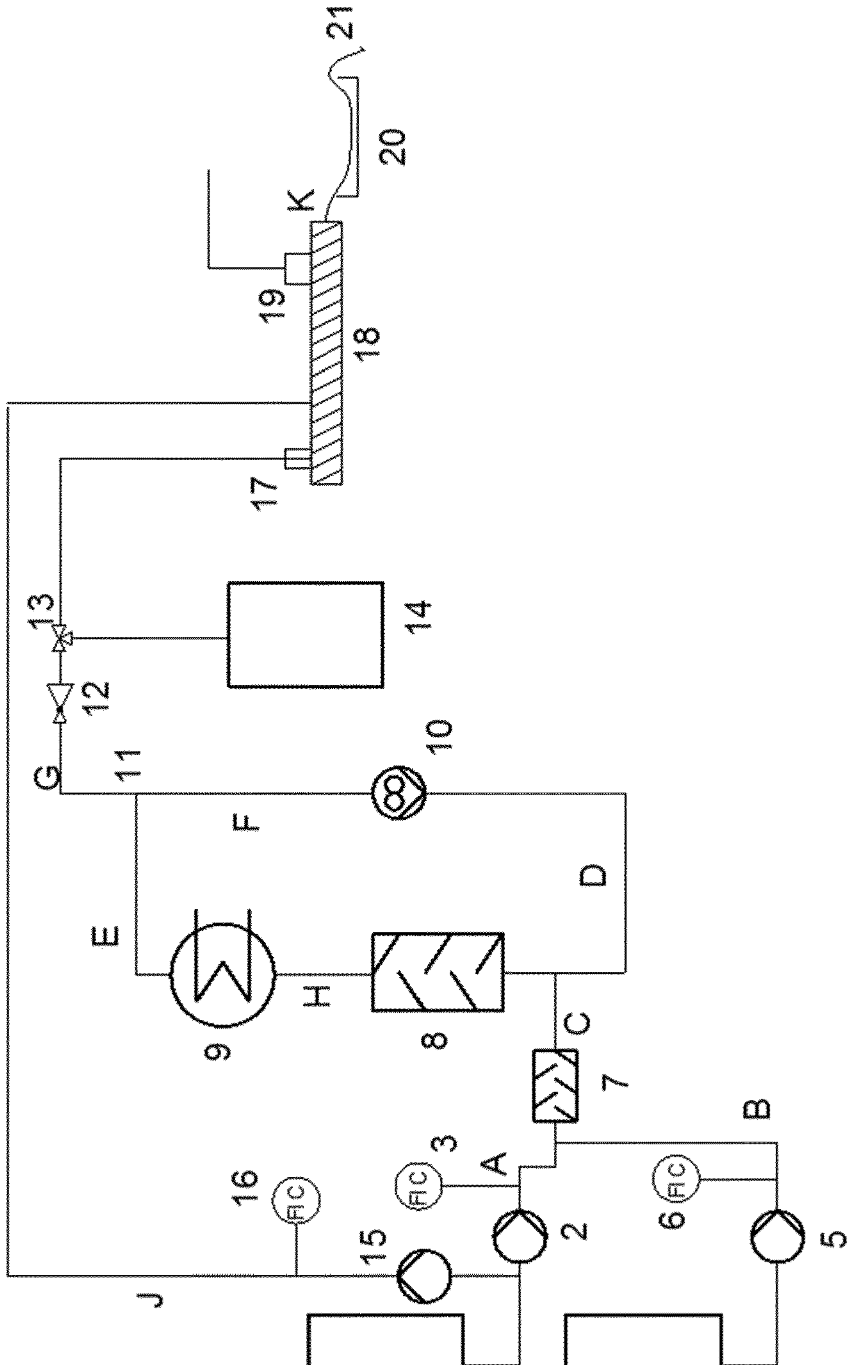
1
2
3
4
5
6
7
8
9
10
11
12
13
14
15
16
17
18
19
20
21
A
B
C
D
E
F
G
H
J
K
FIC
FIC
FIC

# Figur 2

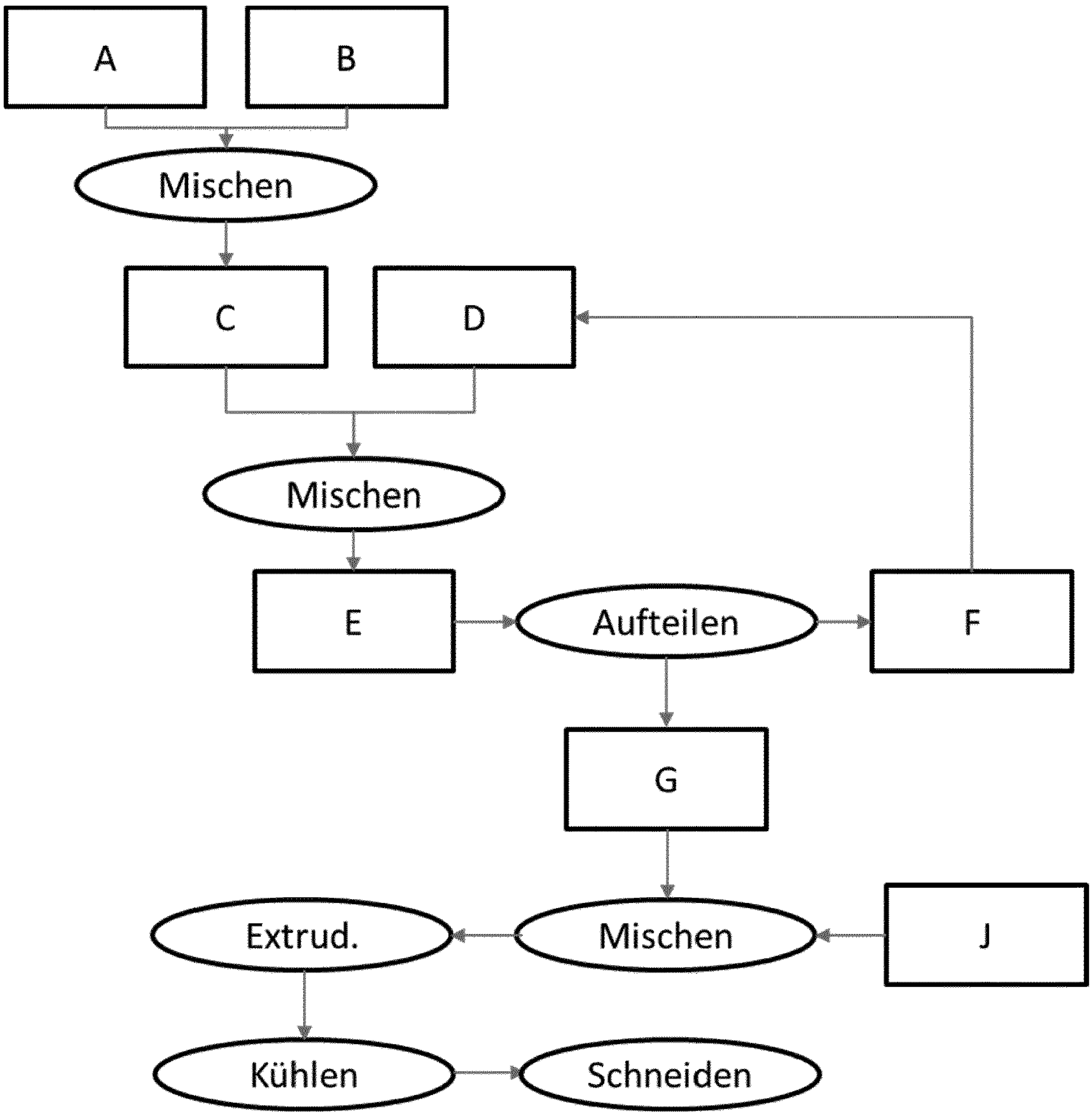
A
B
Mischen
C
D
Mischen
E
Aufteilen
F
G
Extrud.
Mischen
J
Kühlen
Schneiden

Europäisches Patentamt
European Patent Office
Office européen des brevets

# EUROPÄISCHER RECHERCHENBERICHT

Nummer der Anmeldung
EP 19 21 6816

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 0 598 283 A1 (BAYER AG [DE]) 25. Mai 1994 (1994-05-25) * Ansprüche 1-6; Beispiele 3-12 * ----- | 1-23 | INV. C08G18/10 C08G18/32 C08G18/73 |

| RECHERCHIERTE SACHGEBIETE (IPC) |
|---|
| C08G |

Der vorliegende Recherchenbericht wurde für alle Patentansprüche erstellt

2

| Recherchenort | Abschlußdatum der Recherche | Prüfer |
|---|---|---|
| München | 17. Juni 2020 | Sütterlin, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 19 21 6816

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-06-2020

| Im Recherchenbericht angeführtes Patentdokument | Datum der Veröffentlichung | Mitglied(er) der Patentfamilie | Datum der Veröffentlichung |
|---|---|---|---|
| EP 0598283 A1 | 25-05-1994 | EP 0598283 A1 | 25-05-1994 |
| | | JP H06206963 A | 26-07-1994 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102011085944 A1
- WO 0114441 A
- EP 0519734 A
- DE 2901774 A


### In der Beschreibung aufgeführte Nicht-Patentliteratur


- **HOUBEN-WEYL.** Methoden der organischen Chemie'', Band E20 ''Makromolekulare Stoffe. Georg Thieme Verlag, 1987, 1587-1593
- *Justus Liebigs Annalen der Chemie Band,* 1949, vol. 562, 75-136
- High Polymers. **MONOGRAPHIE VON J.H. SAUNDERS ; K.C. FRISCH.** Polyurethane. Verlag Interscience Publishers, 1962, vol. XVI
- **VON R. GÄCHTER U. ; H. MÜLLER.** Taschenbuch für Kunststoff-Additive. Hanser Verlag München, 1990
- High Polymers. **MONOGRAPHIE VON J.H ; SAUNDERS ; K.C. FRISCH.** Polyurethane. Verlag Interscience Publishers, 1962, vol. XVI
- **VON R. GÄCHTER ; U. H. MÜLLER.** Taschenbuch für Kunststoff-Additive. Hanser Verlag München, 1990
- *Firma Witte Chem,* vol. 25, 6-3